(19) Europäisches Patentamt

European Patent Office

Office européen des brevets

(11) EP 0 737 647 B1

## (12) EUROPEAN PATENT SPECIFICATION

(45) Date of publication and mention
of the grant of the patent:
**29.09.1999 Bulletin 1999/39**

(51) Int Cl.6: **C01B 3/38**, C01B 31/18,
C01B 3/56

(21) Application number: 96105632.2

(22) Date of filing: 10.04.1996

(54) **Integrated steam methane reforming process for producing carbon monoxide**

Integriertes Verfahren zur Methandampfreformierung zur Herstellung von Kohlenmonoxid

Procédé intégré de réformation à vapeur pour la production de monoxyde de carbone

(84) Designated Contracting States:
**BE DE ES FR GB IT NL**

(30) Priority: **10.04.1995 US 419317**
**08.04.1996 US 624148**

(43) Date of publication of application:
**16.10.1996 Bulletin 1996/42**

(73) Proprietor: **AIR PRODUCTS AND CHEMICALS, INC.**
**Allentown, PA 18195-1501 (US)**

(72) Inventors:
• **Hufton, Jeffrey Raymond**
**Fogelsville, PA 18051 (US)**
• **Sircar, Shivaji**
**Wescosville, PA 18106 (US)**
• **Baade, William Frederick**
**Breinigsville, PA 18031 (US)**
• **Abrardo, Joseph Michael**
**Schnecksville, PA 18078 (US)**
• **Anand, Madhu**
**Allentown, PA 18102 (US)**

(74) Representative: **Schwabe - Sandmair - Marx**
**Stuntzstrasse 16**
**81677 München (DE)**

(56) References cited:
**EP-A- 0 218 285**        **US-A- 1 740 139**

• **CHEMICAL ENGINEERING SCIENCE, vol. 49, no. 24b, 1994, GREAT BRITAIN, pages 5845-5864, XP000675371 E. ALPAY ET AL.: "Combined reaction and separation in pressure swing processes"**
• **CHEMICAL ENGINEERING SCIENCE, vol. 49, no. 24B, 1 January 1994, pages 5875-5883, XP000534176 CHUN HAN ET AL: "SIMULTANEOUS SHIFT REACTION AND CARBON DIOXIDE SEPARATION FOR THE DIRECT PRODUCTION OF HYDROGEN"**
• **AICHE JOURNAL, vol. 42, no. 10, October 1996, USA, pages 2765-2772, XP000674846 B.T. CARVILL ET AL.: "Sorption-enhanced reaction process"**

Description

## TECHNICAL FIELD OF THE INVENTION

The present invention is a process for producing carbon monoxide (CO) by reforming methane and steam in the presence of a reforming catalyst to produce a reformate product enriched in CO, carbon dioxide and hydrogen. Carbon dioxide ($CO_2$) in the enriched reformate is shifted to CO in an integrated sorption enhanced reaction (SER) cycle which employs a series of cyclic steps to perform the reverse water gas shift reaction to convert $CO_2$ to CO, to partially separate the shift reaction product mixture to recover an enriched CO stream and to prepare the SER reactors for a subsequent SER process cycle.

## BACKGROUND OF THE INVENTION

Carbon monoxide is typically produced by catalytically reforming a hydrocarbon feed with steam, and optionally, carbon dioxide, at high temperatures. The reaction occurs in a steam methane reformer (SMR) which contains catalyst-filled tubes housed in a furnace. The synthesis gas exiting the reformer contains carbon monoxide (CO) along with hydrogen, carbon dioxide ($CO_2$), steam and unconverted methane according to the equilibria established in the following reactions:

$$CH_4 + H_2O \leftrightarrow 3H_2 + CO \qquad \text{Steam Reforming}$$

$$H_2O + CO \leftrightarrow H_2 + CO_2 \qquad \text{Water Gas Shift}$$

$$CH_4 + CO_2 \leftrightarrow 2H_2 + 2CO \qquad CO_2 \text{ Reforming}$$

The above-mentioned reactions are generally carried out at high temperatures (800° - 1000° C) and at high pressures (5-30 atmospheres) wherein the reactants are contacted with a nickel based catalyst. These reactions are thermodynamically controlled. Therefore, the reformate effluent composition shall depend on many variables including pressure, temperature, molar ratio of steam/methane in the reactor feed and carbon dioxide concentration in the reactor feed. A typical SMR effluent composition (mole fractions) possesses 73% $H_2$, 13% CO, 8.5% $CO_2$ and 5.5% $CH_4$ when the SMR reaction is conducted at 850°C and 25 atmospheres using a $CO_2$-free feed mixture containing a 3:1 water/methane molar ratio. The SMR effluent is subjected to a series of reaction and separation operations in order to recover a high purity $H_2$ product (99.9+ mole%) or a high purity CO product (99.5+ mole%).

Carbon monoxide provided in commercial SMR Plants is typically used to manufacture isocyanates and polycarbonates through phosgene chemistry. Alternatively, certain processes for producing oxoalcohols require a synthesis gas having a 1:1 ratio of hydrogen to carbon monoxide. By-product hydrogen and export steam formed during such SMR processes may have fuel value, but may not be required as products.

As is well known in the industry, synthesis gas having a high CO content is produced by injecting $CO_2$ into the reformer feedstock and by reducing the ratio of steam to hydrocarbon in the SMR feedstock. The SMR feedstock can be further enriched in $CO_2$ by recycling $CO_2$ produced and separated from the synthesis gas or recovered from the furnace flue gas or by importing additional $CO_2$ into the feedstock from an outside source. SMR feedstocks having a high $CO_2$ to methane ratio and reduced amounts of steam inhibit the water gas shift reaction from producing additional $H_2$ from CO and will reverse this reaction to produce additional CO from $H_2$ under extreme reaction conditions. Some $CO_2$ also reacts with methane in the SMR feedstock to yield syngas having a low $H_2/CO$ ratio.

The amount of CO produced in conventional SMR processes is limited by reaction thermodynamics wherein a relatively low conversion to CO (~10-15%) necessitates a significant separation effort to recover the desired CO product. Numerous prior art SMR processes for producing synthesis gas are known which utilize a variety of separation cycles to recover the desired CO product from the SMR reformate effluent which typically contains a mixture hydrogen, CO, $CO_2$ and methane.

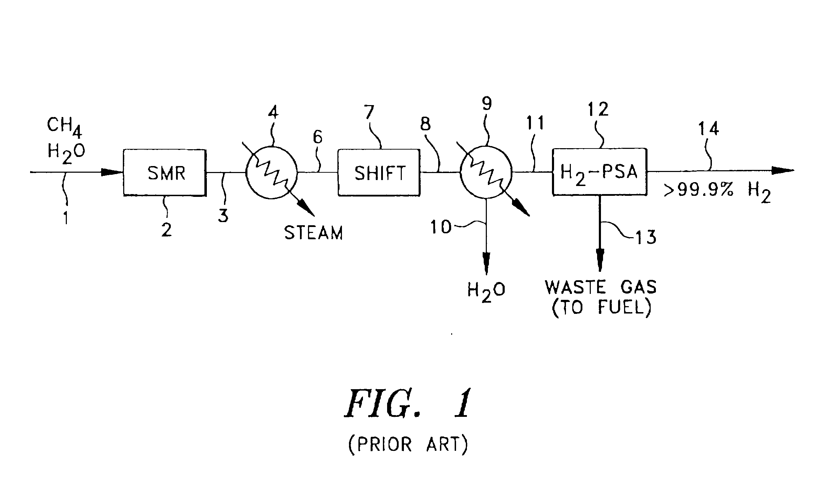

United States Patent 3,986,849 discloses a SMR process for converting water and a source of methane, such as natural gas, to a hydrogen product as depicted in FIG. 1. Methane and water are introduced through line 1 into a conventional SMR reactor 2 and reacted under reforming conditions to produce a $H_2$-enriched reformate stream 3. Stream 3 is introduced into condenser 4 to yield steam and cooled reformate stream 6 at an intermediate temperature of 250°-350°C. The cooled reformate is then fed into water-gas shift reactor 7 (high temperature shift reactor, alone or in combination with a low temperature shift reactor) to convert a portion of the CO in reformate stream 6 to hydrogen by reacting CO with $H_2O$ according to the reaction ($CO + H_2O \leftrightarrow CO_2 + H_2$).

The above-mentioned shift reaction plays a key role in the over-all process when hydrogen is the desired product because the shift reaction increases the hydrogen concentration and quantity in the reformate product mixture prior to separating the reformate product mixture to produce essentially pure hydrogen. Shift reactor effluent 8 is further cooled to a near ambient temperature (25°-50°C) by indirect heat exchange with cooling water in condenser 9 wherein a substantial amount of water is condensed and removed from the reformate via line 10. Finally, stream 11 exiting the condenser is introduced into a hydrogen pressure swing adsorption unit ($H_2$-PSA) to yield essentially pure hydrogen via stream 14 and a waste gas stream 13 which can be used as fuel in the reformer.

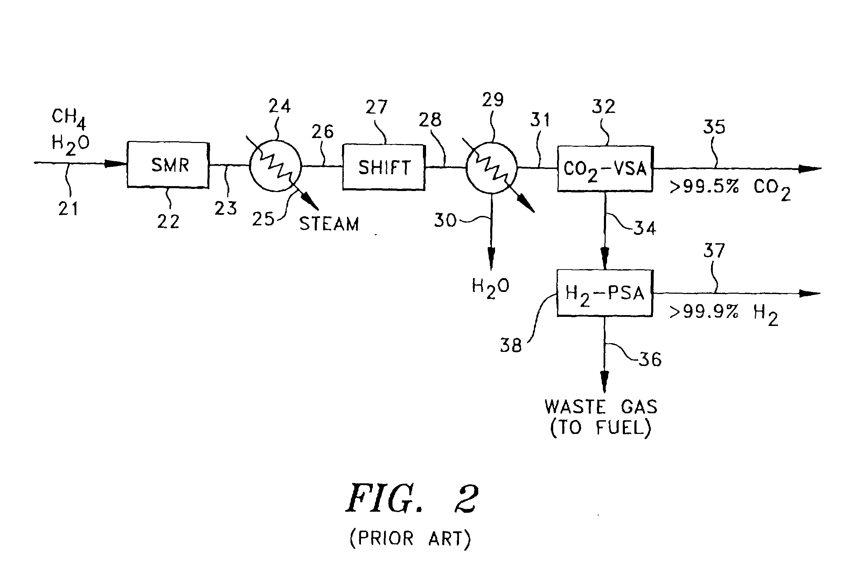

United States Patent 4,171,206 discloses a SMR process for converting water and a source of methane such as natural gas to simultaneously yield a high purity hydrogen product and a high purity $CO_2$ product as depicted in FIG. 2. Methane and water are introduced through line 21 into a conventional SMR reactor 22 and reacted under reforming conditions to produce a reformate stream 23.

Stream 23 is introduced into condenser 24 to yield cooled reformate stream 26 at an intermediate temperature of 250-350°C and condensate stream (not numbered). The cooled reformate is then fed into water-gas shift reactor 27 to convert a portion of the CO in reformate stream 26 to hydrogen. Shift reactor effluent 28 is further cooled to a near ambient temperature (25-50°C) by indirect heat exchange with cooling water in condenser 29 wherein a substantial amount of water is condensed and removed from the reformate via line 30. Finally, reformate stream 31 exiting condenser 29 is introduced into $CO_2$ vacuum swing adsorption (VSA) unit 32 wherein the reformate is separated to provide an essentially pure $CO_2$ product stream 35. The waste gas from $CO_2$ VSA unit 32 is introduced into $H_2$-PSA unit 38 via line 34 and is separated to yield an essentially pure hydrogen stream 37 and waste gas stream 36 which can be used as fuel in reformer 22. The $CO_2$ VSA unit 32 and $H_2$ PSA unit 36 are integrated to obtain maximum separation efficiency.

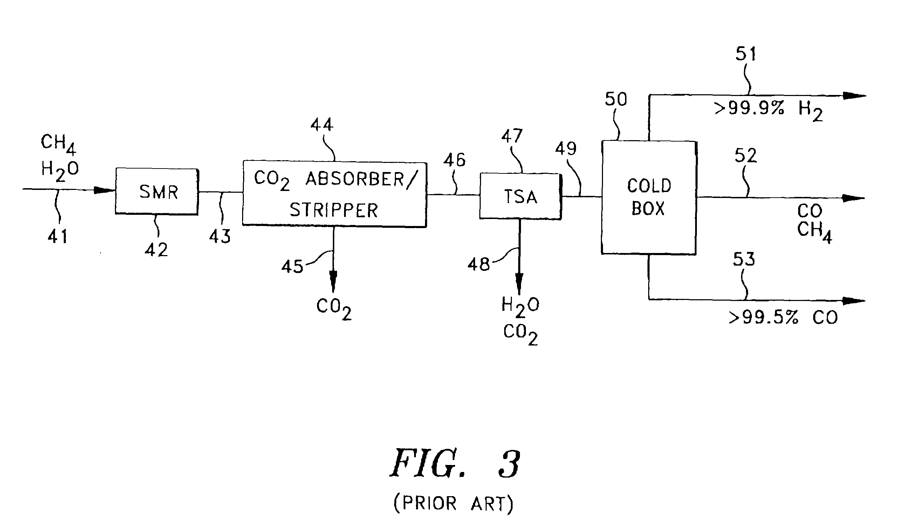

A conventional SMR process is depicted in FIG. 3 wherein water and a source of methane are introduced through line 41 into a conventional SMR reactor 42 and reacted under reforming conditions to produce a reformate stream 43. Stream 43 is introduced into a $CO_2$ absorber/stripper 44 which contains a physico-chemical solvent which removes $CO_2$ from the pre-cooled SMR effluent to provide stream 45 which contains essentially pure $CO_2$ and a $CO_2$-depleted reformate stream 46 which is introduced into thermal swing adsorption unit 47 to remove water and remaining $CO_2$ which is withdrawn from adsorption unit 47 via line 48. $CO_2$ and water depleted stream 49 is introduced into cryogenic cold box 50 to yield essentially pure hydrogen stream 51, essentially pure CO stream 53 and a waste stream 52 containing CO and unreacted methane which can be used as fuel in reformer 42.

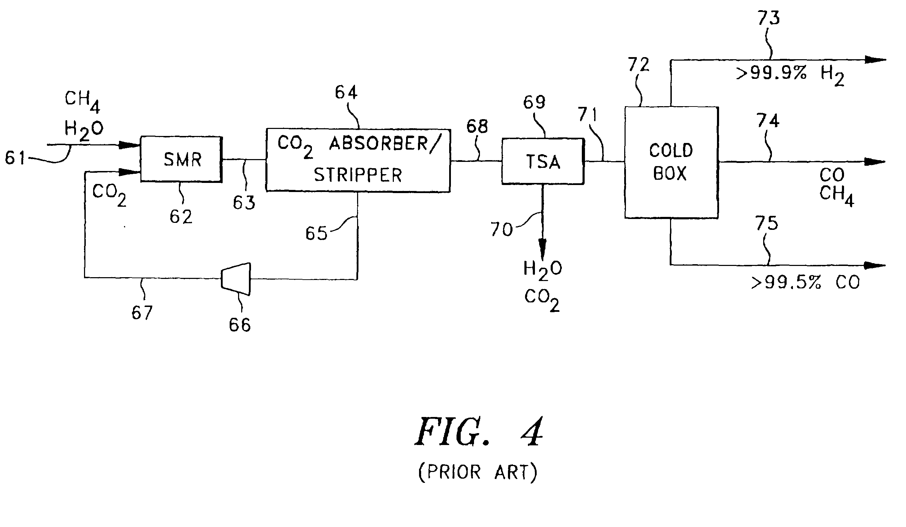

Another conventional SMR process is depicted in FIG. 4 wherein water and a source of methane are introduced through line 61 into a conventional SMR reactor 62 and reacted under reforming conditions to produce a reformate stream 63. Stream 63 is introduced into a $CO_2$ absorber/stripper 64 which contains a physico-chemical solvent which removes $CO_2$ from the pre-cooled SMR effluent to provide a $CO_2$-enriched stream 65 which may be compressed via compressor 66 and reintroduced as $CO_2$ feed into SMR reactor 62 via line 67. $CO_2$ depleted reformate stream 68 exits TSA unit 69 via line 71 and is introduced into cryogenic cold box 72 to yield essentially pure hydrogen stream 73, essentially pure CO stream 75 and waste stream 74 containing CO and unreacted methane which can be used as fuel in reformer 62.

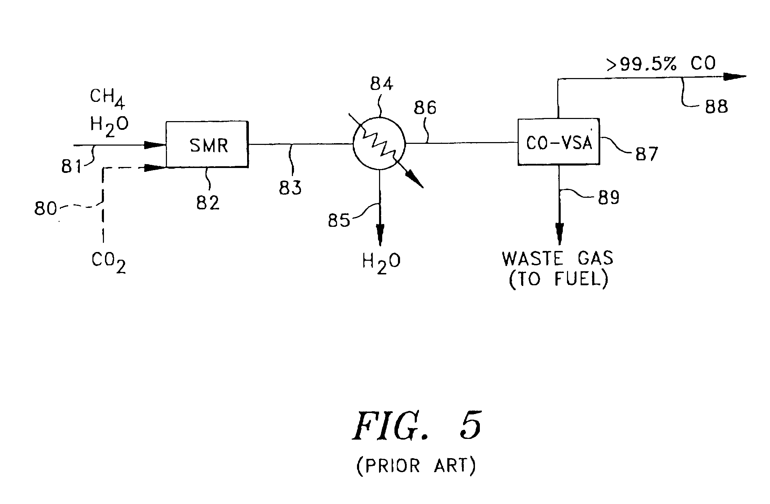

United States Patent 4,915,711 discloses an SMR process as depicted in FIG. 5. A source of methane and water is introduced through line 81 into a conventional SMR reactor 82 and reacted under reforming conditions to produce a reformate stream 83. Alternately, a $CO_2$ stream can also be introduced into the reformer to increase CO production. Stream 83 is introduced into condenser 84 to yield water condensate steam 85 and cooled reformate stream 86 at an intermediate temperature of 30°-120°C. The cooled reformate is then fed into CO-VSA 87 wherein the reformate is separated to provide an essentially pure CO product stream 88 and waste gas stream 89 which can be used as fuel in reformer 82.

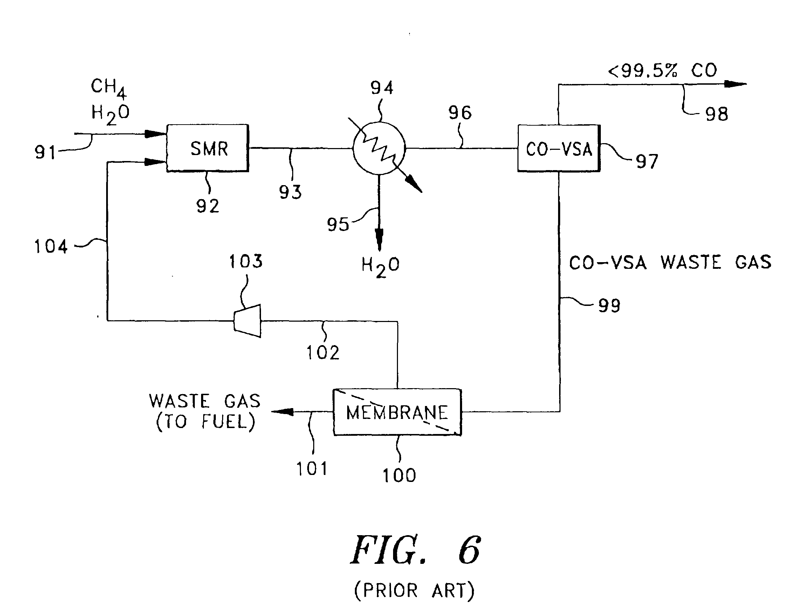

An alternate SMR process is depicted in FIG. 6 wherein a source of methane and water is introduced through line 91 into a conventional SMR reactor 92 and reacted under reforming conditions to produce a reformate stream 93. Stream 93 is introduced into condenser 94 to yield water condensate steam 95 and cooled reformate stream 96 at an intermediate temperature of 30°-120°C. The cooled reformate is then fed into CO-VSA 97 wherein the reformate is separated to provide an essentially pure $CO_2$ product stream 98 and waste gas stream 99 is further processed by passing CO-VSA waste gas through line 99 into a conventional polymer membrane 100 to provide waste gas stream 101 which can be used as fuel in the reformer and $CO_2$-enriched stream 102 which is compressed by compressor 103 and introduced into SMR reactor 92 via line 104 as additional feedstock.

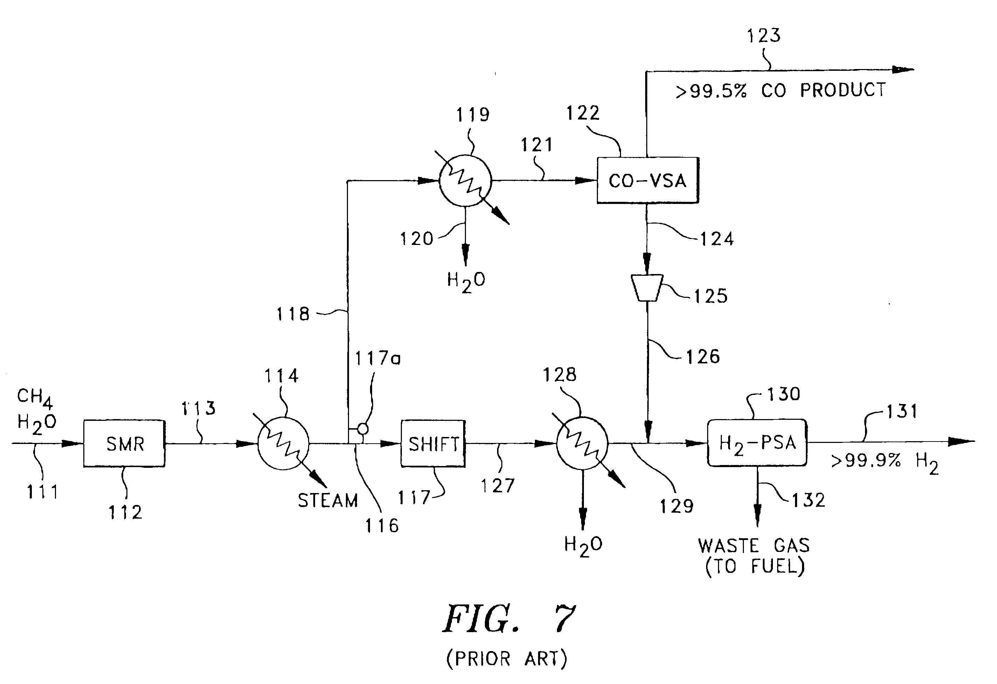

Another alternate SMR process for producing essentially pure CO and essentially pure hydrogen is depicted in FIG. 7. A source of methane and water is introduced through line 111 into a conventional SMR reactor 112 and reacted under reforming conditions to produce a reformate stream 113. Stream 113 is introduced into condenser 114 to yield cooled reformate stream 116 which is fed into water-gas shift reactor 117 to convert a portion of the CO and water in reformate stream 116 to hydrogen. The hydrogen-enriched reformate 127 is passed through condenser 128 to remove water and water-depleted stream 129 is passed into H2-PSA unit 130 to provide waste stream 132 which can be used as fuel in reformer 112 and an essentially pure hydrogen stream 131. A portion of the reformate can be caused to flow into line 118 upon opening valve 117a. Such reformate is passed into condenser 119 to cool the gas and to remove water prior to being transferred by line 121 into CO-VSA 122 wherein the reformate is separated to provide an essentially pure CO stream 123 and a CO-depleted stream 124 which is optionally compressed by compressor or blower 125 and passed through line 126 to be combined with line 129 as passage into $H_2$-PSA 130.

Those of ordinary skill in the art of steam methane reforming are searching for improved reforming processes wherein conversion to the desired CO product is maximized. Moreover, a process which facilitates the reaction of $CO_2$ and hydrogen to form CO and water [reverse water gas shift reaction] would be highly desirable. Unfortunately, no prior art SMR process integrations are known in the art for converting $CO_2$ and hydrogen present in the SMR reformate stream to CO and water. The reverse water gas shift reaction is thermodynamically unfavorable at temperatures below 800°C and temperatures typically in excess of 1000°C are required in order to obtain moderate $CO_2$ conversion to CO. Thus, the reverse water gas shift reaction has not been successfully integrated into a SMR process for producing CO.

Moreover, prior art processes for conducting simultaneous reaction and adsorption steps have not achieved commercial success because product flow rates do not remain sufficiently constant and the desired products are present in unacceptably low concentrations with respect to the undesired reaction products, unreacted feedstock and purge fluids. Industry is searching for ways to improve the general SMR process for producing CO by increasing overall process productivity or by increasing the CO mole fraction of the product mixture being fed into the subsequent separation unit feed stream.

US-A 1,740,139 discloses a process for producing carbon monoxide via the reverse water gas shift reaction. The reaction can be enhanced by use of a catalyst. In accordance with this document, a mixture of carbon dioxide and hydrogen is obtained by fermentation. The equilibrium of the reverse water gas shift reaction is changed by condensation of water.

From Chem. Eng. Sci. 49(24B) pages 5845-5864 another equilibrium controlled process is known wherein several reactors are packed with a mixture of catalyst and adsorbent. One of the products formed by the reaction is adsorbed on the adsorbent, thereby shifting the equilibrium. The adsorption part of the process is performed as a pressure swing adsorption process. The described process shows the steps of pressurizing the reactor; performing reaction, adsorption, product release; depressurizing the reactor, and purging the reactor.

## BRIEF SUMMARY OF THE INVENTION

The present invention is a process for producing carbon monoxide (CO) by reforming methane and steam in the presence of a reforming catalyst to produce a reformate which is enriched in CO, carbon dioxide ($CO_2$) and hydrogen. $CO_2$ in the enriched reformate is shifted to CO in an integrated sorption enhanced reaction (SER) cycle which employs a series of cyclic steps performed in a plurality of reactors to effect a shift reaction to convert $CO_2$ to CO, a separation of the shift reaction product mixture to form a CO-enriched product stream and to prepare the SER reactors for a subsequent SER process cycle.

The claimed process overcomes problems associated with prior art processes for reforming methane and water to carbon monoxide which typically suffer from producing a reformate which contains an inordinate amount of $CO_2$ which is not converted to the desired CO product and which must be separated from the reformate by a costly separation cycle. Moreover, the claimed process overcomes problems associated with the thermodynamic limitations associated with the reverse water gas shift reaction wherein $CO_2$ and Hydrogen are converted to CO and water.

Applicants' invention solves these problems by converting carbon dioxide present in the reactor reformate to additional CO prior to separating the desired CO from the reactor reformate thereby substantially reducing costs associated with the separation cycle. This technical advance is made possible by utilizing a sorption enhanced reaction (SER) cycle which permits the reverse water gas shift reaction to be carried out with high conversion of $CO_2$ to CO at a moderate temperature of 250-350°C and at a pressure of 5-30 atmospheres.

Applicants' process integrates an SER process a series of cyclic steps performed in a plurality of reactors to shift $CO_2$ to CO and to separate the shift gas product mixture into an enriched CO stream. Each reactor contains an admixture of a shift catalyst and a water adsorbent wherein water is selectively removed from the reaction zone by physical adsorption under shift reaction conditions thereby shifting the reaction equilibrium toward formation of desirable CO. The adsorbed water is separated from the adsorbent by utilizing a series of purge and depressurization steps which are performed according to a predetermined timed sequence. Thus, Applicants' SER process which is integrated into the claimed process represents an entirely new cycle for simultaneously obtaining high conversion of $CO_2$ to CO, for producing an enriched CO effluent stream, for efficiently desorbing water from the adsorbent and for preparing each reactor for the next process cycle.

Applicants' claimed process which integrates an SER cycle provides a unique opportunity to react $CO_2$ and

hydrogen present in the SMR effluent to form additional CO prior to performing any process separation steps. The size of the separation unit is substantially reduced because the CO product is present in high concentration and a substantial portion of the $CO_2$ which would typically be removed during the separation steps of conventional SMR processes has been converted to the desired product, CO.

The general embodiment of Applicants' process for producing CO contemplates reacting a feedstock comprising methane and water in the presence of a steam-methane reforming catalyst at a temperature ranging from 700°C to 1000°C and a pressure ranging from 2 to 50 atmospheres to form a reformate comprising hydrogen, carbon monoxide, carbon dioxide and unreacted feedstock.

The second step of the general embodiment contemplates removing water from the reformate to form a water-depleted reformate and heating the water-depleted reformate to a temperature ranging from 200°C to 500°C to form a heated water-depleted reformate. The third step of the general embodiment comprises introducing the heated water-depleted reformate into a plurality of reactors operated in a predetermined timed sequence according to the following steps which are performed in a cycle within each reactor:

(1) reacting the heated water-depleted reformate at a first pressure in a first reactor containing an admixture of a water adsorbent and a water gas shift catalyst under reaction conditions sufficient to convert carbon dioxide and hydrogen to carbon monoxide and to adsorb water onto the adsorbent. A CO-enriched stream is withdrawn from the reactor as product.

(2) countercurrently depressurizing the first reactor to a second pressure by withdrawing a mixture comprising unreacted feedstock, carbon monoxide and water;

(3) countercurrently purging the first reactor at the second pressure with a weakly adsorbing purge fluid with respect to the adsorbent to desorb water from the adsorbent and withdrawing a mixture comprising unreacted feedstock, carbon monoxide and water;

(4) countercurrently purging the first reactor at the second pressure with a CO-enriched purge fluid which does not comprise hydrogen and carbon dioxide to desorb the weakly adsorbing purge fluid and withdrawing a mixture comprising the weakly adsorbing purge fluid, carbon monoxide and water; and

(5) countercurrently pressurizing the first reactor from the second pressure to the first pressure with the CO-enriched purge fluid prior to commencing another process cycle within the first reactor.

Additional steps may be performed under the general embodiment. For example, the CO-enriched stream of step (1) can be separated using conventional techniques to form a stream comprising CO and a CO-depleted stream. This CO-depleted stream can be separated to form a hydrogen-enriched waste gas stream and a hydrogen depleted, carbon dioxide enriched recycle stream wherein a portion of the recycle stream can be recycled to the reformer. Alternately, the first reactor can be countercurrently purged at the first pressure with a weakly adsorbing purge fluid following step (1) and prior to performing step (2) wherein a mixture comprising unreacted feedstock, carbon monoxide and water is withdrawn from the reactor. This mixture can be recycled as feed to the SER reactors. Finally, an additional source of carbon dioxide can be introduced into the heated water-depleted reformate stream prior to conducting steps (1) through (5).

An alternate embodiment of Applicants' process for producing CO and hydrogen contemplates reacting a feed stock comprising methane and water in the presence of a steam-methane reforming catalyst at a temperature ranging from 700°C to 1000°C and a pressure ranging from 2 to 50 atmospheres to form a reformate comprising hydrogen, carbon monoxide, carbon dioxide and unreacted feedstock.

The second step of the alternate embodiment contemplates cooling the reformate to a temperature ranging from 200° to 500°C to form a cooled reformate and dividing the cooled reformate into a first stream and a second stream. The third step contemplates contacting the first stream with a water gas shift catalyst under reaction conditions sufficient to form a hydrogen-enriched first stream, cooling the hydrogen-enriched first stream to form a cooled hydrogen-enriched first stream and separating the cooled hydrogen enriched first stream to form a hydrogen product stream and a hydrogen-depleted stream.

The fourth step of the alternate embodiment contemplates removing water from the second stream to form a water-depleted second stream and heating the water-depleted second stream to a temperature ranging from 200° to 500°C to form a heated water-depleted second stream. The fifth step of the alternate embodiment comprises introducing the heated water-depleted reformate into a plurality of reactors operated in a predetermined timed sequence according to the following steps which are performed in a cycle within each reactor:

(1) reacting the heated water-depleted second stream at a first pressure in a first reactor containing an admixture of a water adsorbent and a water gas shift catalyst under reaction conditions sufficient to convert carbon dioxide and hydrogen to carbon monoxide and to adsorb water onto the adsorbent and withdrawing a CO-enriched stream;

(2) countercurrently depressurizing the first reactor to a second pressure by withdrawing a mixture comprising unreacted feedstock, carbon monoxide and water;

(3) countercurrently purging the first reactor at the second pressure with a weakly adsorbing purge fluid with respect to the adsorbent to desorb water from the adsorbent and withdrawing a mixture comprising unreacted feedstock, carbon monoxide and water;

(4) countercurrently purging the first reactor at the second pressure with a CO-enriched purge fluid which does not comprise hydrogen and carbon dioxide to desorb the weakly adsorbing purge fluid and withdrawing a mixture comprising the weakly adsorbing purge fluid, carbon monoxide and water; and

(5) countercurrently pressurizing the first reactor from the second pressure to the first pressure with the CO-enriched purge fluid prior to commencing another process cycle within the first reactor.

The sixth and final step of the process of the alternate embodiment contemplates separating the CO-enriched stream of step (1) to form a stream comprising CO and a CO-depleted stream, compressing the CO-depleted stream and combining the compressed CO-depleted stream with the cooled hydrogen enriched first stream of step c prior to separating the cooled hydrogen enriched first stream to form a hydrogen product stream and a hydrogen-depleted stream.

Additional steps may be performed under the alternate embodiment. For example, the first reactor can be countercurrently purged at the first pressure with a weakly adsorbing purge fluid following step (1) and prior to performing step (2) wherein a mixture comprising unreacted feedstock, carbon monoxide and water is withdrawn from the reactor.

Suitable catalysts for conducting the steam-methane reforming reaction according to the general and alternate embodiments include conventional steam-methane reforming and prereforming catalysts such as nickel-alumina, nickel-magnesium alumina and the noble metal catalysts.

As stated in the general and alternate embodiments, the SER cycle contemplates conducting the reverse water gas shift reaction within a plurality of reactors containing an admixture of a water adsorbent and a water gas shift catalyst. The admixture of the adsorbent and the catalyst typically comprises from 5% to 95% by weight of the adsorbent and from 95% to 5% by weight of the catalyst. Suitable water adsorbents include those selected from the group consisting of zeolites, alumina or silica gel. Suitable water gas shift catalysts include those selected from the group consisting of iron -chromium high temperature shift catalyst, copper/zinc oxide low temperature shift catalyst and copper/zinc oxide medium temperature shift catalyst.

As shall become more apparent upon reading the Detailed Description of the Invention, Applicants' process overcomes problems associated with prior art processes by utilizing a novel series of reaction, adsorption and desorption steps to convert $CO_2$ present in the SMR reformate to CO and to separate and collect CO in substantially enriched form under a relatively constant flow rate at feedstock pressure. This result is accomplished in part by Applicants' unexpected use of a reaction product, CO or an enriched CO stream, to purge the SER reactors and to pressurize the reactors to reaction pressure prior to commencing another SER cycle.

While one of ordinary skill in the art would expect that the purging and pressurizing of the SER reactor with a product of the reverse water gas shift reaction prior to commencing the reaction step would undesirably shift the equilibrium constant toward formation of $CO_2$ and hydrogen, Applicants have discovered that purging the SER reactors with product gas instead of $CO_2$ or hydrogen reactants or alternate purge fluid provides a highly efficient process wherein a CO-enriched stream can be collected at feedstock pressure at a relatively constant flow rate.

## BRIEF DESCRIPTION OF THE DRAWINGS

FIG. 1 illustrates a steam methane reforming (SMR) process according to United States Patent 3,986,849 wherein SMR reactor reformate is further reacted and is separated by utilizing a high temperature shift (HTS) reactor and a hydrogen pressure swing adsorption ($H_2$- PSA) unit to provide a highly pure hydrogen product.

FIG. 2 illustrates a SMR process according to United States Patent 4,171,206 wherein SMR reactor reformate is further reacted and is separated by utilizing a HTS reactor and an integration of a $CO_2$ -VSA unit and a $H_2$-PSA unit to provide an essentially pure stream of carbon dioxide and an essentially pure stream of hydrogen.

FIG. 3 illustrates a prior art SMR process which utilizes a $CO_2$ absorber/stripper to remove $CO_2$ from the reformate stream prior to introducing the reformate stream into a thermal swing adsorption (TSA) unit to further remove water and carbon dioxide prior to final separation in a cryogenic cold box to yield an essentially pure hydrogen stream, an essentially pure CO stream and a waste gas stream containing methane and CO which can be used as fuel in the reformer.

FIG. 4 illustrates a modified version of the process according to FIG. 3 wherein a $CO_2$ absorber/stripper is utilized to remove $CO_2$ from the reformate stream prior to introducing the stream into TSA unit to further remove water and $CO_2$ from the reformate. A portion of the $CO_2$ separated by the adsorber/stripper is compressed and recycled into the SMR for further conversion to hydrogen and CO.

FIG. 5 illustrates a prior art SMR process for producing essentially pure CO wherein the SMR reformate is condensed to remove water prior to separating the reformate in a CO-VSA to provide an essentially pure CO product and a waste gas stream which can be recycled as fuel to the reformer.

FIG. 6 illustrates a modified version of FIG. 5 wherein the waste gas stream recovered from the CO-VSA is contacted with a permselective polymeric membrane to provide a waste gas stream which can be recycled as fuel to the reformer and a $CO_2$-enriched stream which is compressed and reintroduced into the SMR reactor for further conversion to CO and hydrogen.

FIG. 7 illustrates a prior art SMR process wherein SMR reactor reformate is separated into a first stream which is introduced into a HTS reactor and a second stream which is introduced into a CO-VSA to yield an essentially pure CO product and a CO-depleted stream which is combined with the HTS reactor effluent and separated in a $H_2$-PSA unit to provide an essentially pure hydrogen product.

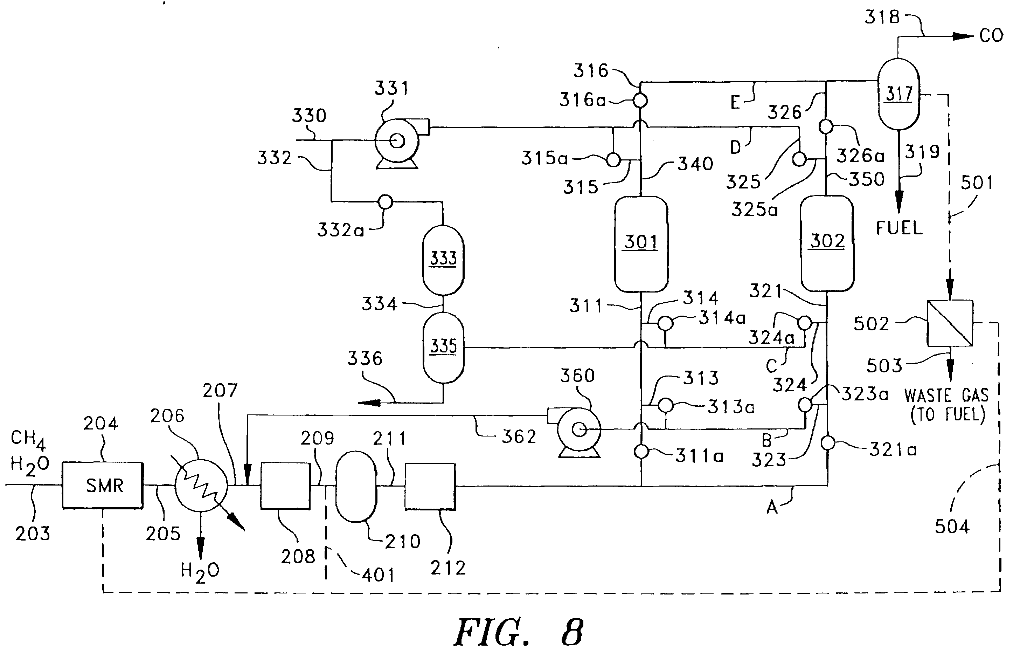

FIG. 8 illustrates a general embodiment of the claimed SMR process for making CO wherein methane and water are reacted in the presence of a catalyst to form a reformate product comprising carbon dioxide, carbon monoxide and hydrogen. The process integrates a sorption enhanced reaction (SER) cycle to further convert carbon dioxide formed in the SMR reactor to additional carbon monoxide and to remove water from the reaction mixture to further drive the equilibrium-controlled reaction toward formation of CO. The SER cycle employs a series of cyclic steps to perform a separation of the product mixture formed during the SER cycle and to prepare the SER reactors for a subsequent process cycle

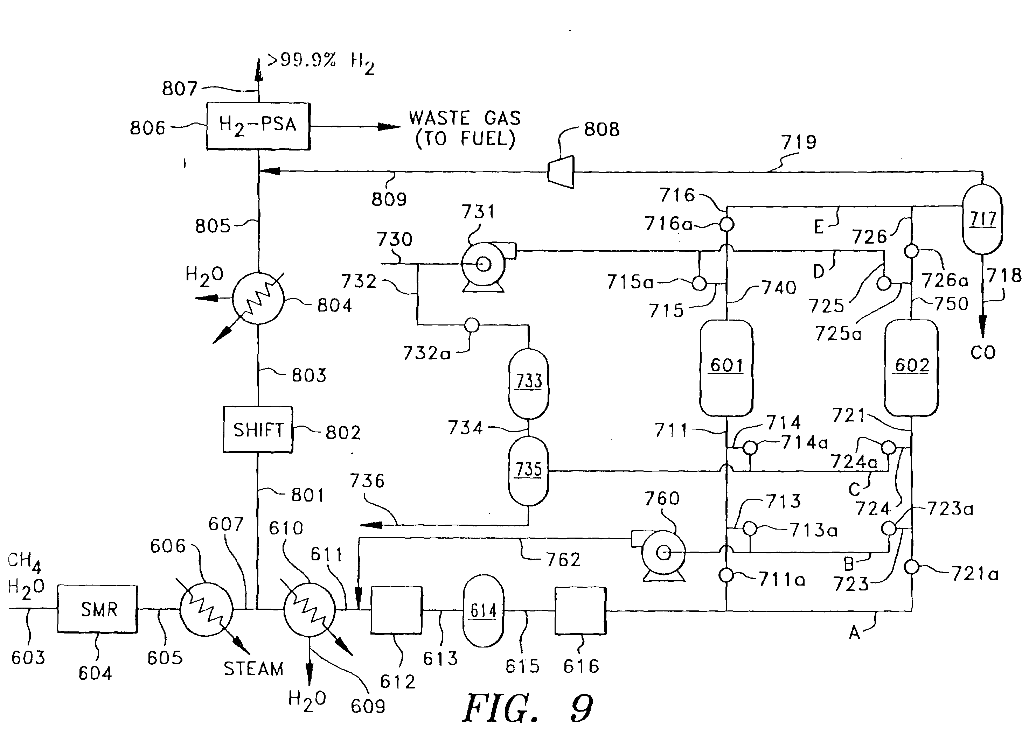

FIG. 9 illustrates an alternate embodiment of the claimed SMR process for making an essentially pure CO stream and an essentially pure hydrogen stream wherein methane and water are reacted in the presence of a catalyst to form a reformate product comprising carbon dioxide, carbon monoxide and hydrogen. The process integrates a high temperature shift reactor to enhance hydrogen production and a sorption enhanced reaction (SER) cycle to further convert carbon dioxide formed in the SMR reactor to additional carbon monoxide and to remove water from the reaction mixture to further drive the equilibrium-controlled reaction toward formation of CO. The SER cycle employs a series of cyclic steps to perform a separation of the product mixture formed during the SER cycle and to prepare the SER reactors for a subsequent process cycle.

## DETAILED DESCRIPTION OF THE INVENTION

Applicants will now discuss in greater detail their process for producing carbon monoxide (CO) which provides numerous benefits over prior art processes. Specifically, greater conversion of reformer feedstock to CO product is achieved; a more concentrated reaction product is obtained than could be achieved using a conventional SMR process which does not utilize Applicants' SER cycle, which shall be discussed in greater detail, and the claimed process can be operated at less stringent conditions than prior art processes because high conversion of $CO_2$ and hydrogen is obtained by removing a reaction product and not by increasing reactor temperature.

The general embodiment of Applicant's process is described in FIG. 8 which illustrates a process flow diagram which depicts a steam methane reformer 204, condenser 206, drier 208, feed heater 212, SER reactors 301 and 302; numerous control valves; manifolds A through E; pumps 331 and 360; separators 317 and 335; and surge vessels 210 and 333. Referring to Fig. 8, a hydrocarbon feedstock, e.g. methane or natural gas, is desulfurized in a vessel (not shown) using an adsorbent as is well known in the art The desulfurized hydrocarbon feedstock is mixed with steam to form a mixed reformer feedstock represented by stream 203. Feedstock 203 is preheated in a preheater (not shown) and introduced into SMR reformer 204. Such reformers are well known in the art and are heated by firing a mixture of fuel and air (not shown). The reformer typically operates at temperatures of 800° to 1000°C and pressures of 5 to 30 atmosphere and produces a reformate consisting of about 73% hydrogen, 13% CO, 9% $CO_2$ and 5% methane on a dry basis. The reformate is sent through line 205 to a condenser 206 where the gas temperature is reduced and some of the water in the gas is removed by condensation. The gas travels to drier 208 via line 207 where the effluent is dried over a bed of water adsorbent. These drier units are well known in the industry and can be operated in a thermal or pressure swing mode. The dry gas is transferred through line 209 into surge vessel 210 (optional) wherein fluid is transferred through line 211 into heater 212 to form a heated water-depleted reformate stream which is routed into Manifold A. The remaining portion of FIG. 8 represents the SER process wherein the heated water-depleted reformate shall be subject to a shift reaction in a plurality of reactors operated in cycle to convert $CO_2$ and hydrogen in the reformate to CO and water via the reverse water gas shift reaction and to recover a CO-enriched product.

Manifold A is in flow communication with branch inlet lines 311 and 321 which are connected to the inlet ends of reactors 301 and 302. Lines 311 and 321 are equipped with valves 311a and 321a, respectively. Opening of the appropriate valve permits the pressurized heated water-depleted reformate to flow through manifold A into the selected reactor being initially placed on stream. Thus, by opening valve 311a, while valve 321a is closed, the reformate may be caused to flow from manifold A, through line 311 and into reactor 301.

Reactors 301 and 302 are fitted at their respective outlet ends with lines 340 and 350 respectively, each equipped with control valves 316a and 326a, respectively. Lines 340 and 350 are operatively connected to manifold E via lines 316 and 326 through which a CO-enriched stream withdrawn from reactors 301 and 302 can be collected in separator 317. Separator 317 can consist of any conventional separation system including a CO-VSA unit or a conventional distillation system. The high purity CO product can be collected via line 318 and residuals may be collected via line 319 for fuel value or recycle. Thus, by opening the appropriate valve 316a or 326a, the CO-enriched mixture is caused to flow from the corresponding reactor through lines 340 and 316 or lines 350 and 326 into manifold E for passage into separator 317.

Reactors 301 and 302 are operatively connected to lines 311 and 321, each of which is in flow communication with lines 313 and 323. Lines 313 and 323 are provided with control valves 313a and 323a, respectively, such lines being in flow communication with manifold B. Manifold B can be placed in flow communication with reactor 301 or 302 via lines 313 and 323 upon opening valve 313a or 323a, respectively. Manifold B is also in flow communication with pump 360 which is connected to line 362 which can be combined with stream 207.

Manifold C is in flow communication with reactors 301 and 302 via lines 314 and 324, each line which is equipped with valves 314a and 324a, respectively. Regeneration effluent from reactors 301 and 302 may be passed through lines 314 and 324 into manifold C for separation in separator 335 into stream 336 which is a water-enriched product stream and stream 334 comprising weakly adsorbing purge fluid which can be passed into storage tank 333 (optional) for later use.

Manifold D is connected to pump 331 which receives various process fluids via lines 330 and 332. Such process fluids pass through line 330 or line 332 and are pressurized via pump 331. The pressurized fluids may be passed through manifold D which is in flow communication with reactors 301 and 302 via lines 315 and 325, respectively. Lines 315 and 325 are each fitted with valves 315a and 325a such that the flow of streams from Manifold D into reactors 301 and 302 can be controlled. Moreover, weakly adsorbing purge fluid can be transferred to pump 331 via line 332 by opening valve 332a or by importing weakly adsorbing purge fluid via line 330.

Operation of the SER cycle of the several embodiments represented in FIG. 8 will now be explained in connection with an arbitrarily chosen cycle having eight timed periods of ten minutes per period as set forth in Table 1. Although not limited thereto, the SER process as illustrated in FIG. 8 utilizes reactors 301 and 302 which are operated in cycle according to a predetermined timed sequence. Other arrangements using fewer or a greater number of reactors and the associated gas manifolds and switch valves may be employed. optionally using interrupted or discontinuous operation (using idling) of pumps. Other arrangements using more than two reactors may be employed by appropriate sequencing of the individual steps or periods of the process cycle.

According to the general embodiment of FIG. 8, each of the reactors 301 and 302 undergo four periods of the reaction/adsorption step, referred to as the sorpreaction step, one period of the depressurization step, one period of the Purge I step, one period of the Purge II step, and one period of the pressurization step. As illustrated in Table 1, the steps undertaken at startup in each of reactors 301 and 302 are staggered to enable at least one of the two reactors to undergo the sorpreaction step at all times during the process cycle. The operation of the invention described in FIG. 8 involves principally the following sequence of steps: In applying the following steps, the first pressure ranges from 2 atmospheres to 50 atmospheres and the second pressure ranges from 0.05 to 2 atmospheres.

## TABLE 1

| Steps | Time Minutes | 311a | 313a | 314a | 315a | 316a | 332a | 321a | 323a | 324a | 325a | 326a | 332a | Steps Reactor/Sorber II |
|---|---|---|---|---|---|---|---|---|---|---|---|---|---|---|
| Sorpreaction | 0 to 10 | O | C | C | C | O | C | C | O | C | C | C | C | Depressurize |
| Sorpreaction | 10 to 20 | O | C | C | C | O | C | C | C | O | O | C | C | Purge I |
| Sorpreaction | 20 to 30 | O | C | C | C | O | C | C | C | O | O | C | C | Purge II |
| Sorpreaction | 30 to 40 | O | C | C | C | O | C | C | C | C | O | C | C | Pressurize |
| Depressurize | 40 to 50 | C | O | C | C | C | C | O | C | C | C | O | C | Sorpreaction |
| Purge I | 50 to 60 | C | C | O | O | C | C | O | C | C | C | O | C | Sorpreaction |
| Purge II | 60 to 70 | C | C | O | O | C | C | O | C | C | C | O | C | Sorpreaction |
| Pressurize | 70 to 80 | C | C | C | O | C | C | O | C | C | C | O | C | Sorpreaction |

(a) **SORPREACTION**—the heated water depleted reformate (feedstock) at a first predetermined pressure is passed through the reactor containing an admixture of shift catalyst and adsorbent preferentially selective toward water wherein a CO-enriched stream is withdrawn from the reactor. Water is selectively adsorbed by the adsorbent and a reaction mass transfer zone (RMTZ) is formed inside the reactor which moves toward the outlet or discharge end of the reactor as more feedstock is passed through the reactor. The adsorbent at the leading edge of the RMTZ is essentially free of the adsorbed water while the trailing edge of the RMTZ is equilibrated with water at the local conditions. The sorpreaction step is continued until the adsorbent in the reactor is essentially saturated with water. In other words, the sorpreaction step ends once the adsorption RMTZ has reached the effluent end of the reactor or somewhat short of it. The CO-enriched stream is discharged from the reactor.

(b) **DEPRESSURIZATION**—the reactor is countercurrently depressurized to a second predetermined pressure by withdrawing a mixture comprising unreacted feedstock, CO and water. The depressurization step is continued until the reactor reaches the second predetermined pressure.

(c) **PURGE I**— the reactor is countercurrently purged at the second pressure with a weakly adsorbing purge fluid to desorb water from the adsorbent and a mixture comprising weakly adsorbing purge fluid, unreacted feedstock, a portion of CO and a portion of water is withdrawn from the reactor.

(d) **PURGE II**—the reactor is countercurrently purged at the second pressure with a CO-enriched purge fluid which does not contain $CO_2$ and hydrogen to desorb the weakly adsorbing purge fluid and a mixture comprising the weakly adsorbing purge fluid, CO and water is withdrawn from the reactor.

(e) **PRESSURIZATION**—the reactor is countercurrently pressurized from the second pressure to the first pressure with CO-enriched purge fluid prior to commencing another process cycle within the reactor.

The valve positions during the above-mentioned operating cycle are also set forth in Table 1. The designation "O" indicates that a specified valve is open while a "C" represents that a specified valve is closed. The operative sequence of steps occurring in reactor 301 during a complete process cycle will now be described in exhaustive detail so that operation of a continuous process will be fully understood. The identical sequence of steps according to Table 1 occurs in staggered sequence in reactor 302.

Again, referring to the embodiment disclosed in FIG. 8 and the sequence periods and valve positions designated in Table 1, reactor 301 undergoes four sequence periods of the sorpreaction step. Feedstock stored in storage tank 210 (optional), is introduced into reactor 301 by opening valves 311a and 316a and closing valves 313a, 314a and 315a thereby allowing feedstock to flow through manifold A, line 311 and into reactor 301 which contains an admixture of a desired shift catalyst and a water-selective adsorbent.

The sorpreaction is continued until reactor 301 is essentially saturated with adsorbed water. Water is selectively adsorbed onto the adsorbent and a reaction mass transfer zone (RMTZ) is formed within reactor 301 which moves toward the discharge end of reactor 301 as more feedstock is passed. The sorpreaction is completed when the MTZ reaches the effluent end of the reactor or somewhat short of it by a predesigned set point.

A CO-enriched stream exits the discharge end of reactor 301 via lines 340 and 316 and flows into manifold E for collection in separator 317. Optionally, the mixture in separator 317 can be separated by conventional techniques such as pressure swing adsorption, vacuum swing adsorption, thermal swing adsorption or distillation or condensation to form a stream comprising essentially pure CO which is discharged from separator 317 via line 318 and the remainder of the components of the mixture are discharged via line 319.

The process proceeds with one period of the depressurization step wherein reactor 301 is countercurrently depressurized to a second predetermined pressure by withdrawing a mixture comprising unreacted feedstock, CO and water from the inlet end of reactor 301. Valve 313a is opened while valves 311a and 314a remain closed allowing the mixture to be passed through lines 311 and 313 into manifold B and in flow communication with pump 360. The mixture exits the discharge end of pump 360 proceeding via line 362 for use as fuel (not shown) or recycle into line 207 for use as feedstock in a subsequent process cycle. The depressurization step is continued until the reactor reaches the second predetermined pressure.

Reactor 301 is then subjected to one period of the purge I step. Reactor 301 is countercurrently purged at the second pressure with weakly adsorbing purge fluid. Upon opening valves 314a and 315a while valves 325a and 332a remain in the closed position, weakly adsorbing purge fluid from an external source passes through pump 331 via line 330 and exits pump 331 at the second pressure to proceed via manifold D, line 315 and line 340 into the exit end of reactor 301. A mixture comprising weakly adsorbing purge fluid, unreacted feedstock, CO and water is withdrawn from reactor 301 via line 311, line 314 and manifold C and is collected in separator 335. This mixture may be used as fuel, discharged for use outside the process or separated in separator 335 to form a stream of weakly adsorbing purge gas and a water enriched stream 336. A portion of the weakly adsorbing purge fluid may be transferred through line 334 into storage tank 333 for future use. Upon demand via opening valve 332a, weakly adsorbing purge fluid may be drawn to pump 331 via lines 332 and 330 for use in subsequent process cycles.

Reactor 301 is then subjected to one period of the purge II step wherein reactor 301 is countercurrently purged with a CO-enriched fluid which does not contain both hydrogen and $CO_2$. Upon opening valves 314a and 315a while valves 325a and 332a remain in the closed position, the CO-enriched purge fluid from an external source passes through pump 331 via line 330 and exits pump 331 at the second pressure to proceed via manifold D, line 315 and line 340 into the exit end of reactor 301. A mixture comprising weakly adsorbing purge fluid, water and CO-enriched purge fluid is withdrawn from reactor 301 via line 311, line 314 and manifold C and is collected in separator 335. This mixture may be used as fuel or discharged for use outside the process.

The final step of the process cycle involves a single sequence of the pressurization step wherein reactor 301 is countercurrently pressurized from the second pressure to the first pressure with a CO-enriched purge fluid or high purity CO product stream 318 prior to commencing another process cycle within the reactor. Specifically, upon opening valve 315a while valves 311a, 313a, 314a, 325a and 332a remain in the closed position, the CO-enriched purge fluid passes through pump 331 via line 330 and exits pump 331 at the second pressure to proceed via manifold D, line 315 and line 340 into the exit end of reactor 301. This step is stopped when reactor 301 reaches the first pressure.

The process proceeds through additional cycles according to the above-mentioned steps enumerated in Table 1. While the sequence periods are depicted as being of equal length, this is neither required or necessary. The times will be set by allowable maximum gas flow rates, valve and line sizes and the properties of the adsorbent used. Alternate routines may be employed for establishing the duration of each of the cycle steps. For example, the end of a particular step may be determined by other techniques known in the art such as by analysis of the composition of the reactor effluent.

Several variations to the general embodiment may be practiced to meet the particular needs of each plant. For example, the CO-enriched stream of manifold E can be separated in separator 317 to form stream 318 comprising essentially pure CO and a CO-depleted stream 501. Stream 501 can be admitted to a conventional polymeric membrane 502 to form a hydrogen-enriched waste gas stream 503 and a hydrogen depleted, carbon dioxide enriched recycle stream 504 which may be recycled into SMR reactor 204.

Alternately, each reaction may be subjected to an additional countercurrent Purge step at the first pressure with a weakly adsorbing purge fluid between the sorpreaction step and the depressurization step and withdrawing a mixture comprising unreacted feedstock, CO and water which can be recycled as feed to the SER reactors via manifold B, pump 360 and line 362. Moreover, additional $CO_2$ may be added to the heated water-depleted reformate stream 209 prior to conducting the SER cycle in order to balance the $CO_2$ and hydrogen stoichiometry for the shift reaction.

The alternate embodiment of Applicant's process is described in FIG. 9 which illustrates a process flow diagram which depicts a steam methane reformer 604, shift reactor 802, hydrogen PSA unit 806, compressor 808, condensers 606, 610 and 804, drier 612, feed heater 616, SER reactors 601 and 602; numerous control valves; manifolds A through E; pumps 731 and 760; separators 717 and 735; and surge vessels 614 and 733. Referring to Fig. 9, a hydrocarbon feedstock, e.g. methane or natural gas, is desulfurized in a vessel (not shown) using an adsorbent as is well known in the art. The desulfurized hydrocarbon feedstock is mixed with steam to form a mixed reformer feedstock represented by stream 603. Feedstock 603 is preheated in a preheater (not shown) and introduced into SMR reformer 604. Such reformers are well known in the art and are heated by firing a mixture of fuel and air (not shown). The reformer typically operates at temperatures of 800° to 1000°C and pressures of 5 to 30 atmospheres and produces a reformate consisting of about 73% hydrogen, 13% CO, 9% $CO_2$ and 5% methane on a dry basis. The reformate is sent through line 605 to a condenser 606 where the gas temperature is reduced to 200° to 500°C. The gas is split into a first stream which passes through line 801 and a second stream which passes through condenser 610. The cooled reformate passing through line 801 flows through a shift reactor 802 where CO and water are shifted to hydrogen. The hydrogen-enriched stream 803 exiting the shift reactor is cooled to 30° to 120°C in condenser 804 wherein substantial water is removed by condensation. The water depleted, hydrogen enriched stream 805 is sent to the hydrogen PSA 806 to produce a high purity hydrogen stream 807 and a waste stream. The second stream entering condenser 610 is cooled to ambient temperature and water is removed by condensation. The gas travels to drier 612 via line 611 where the effluent is dried over a bed of water adsorbent. These drier units are well known in the industry and can be operated in a thermal or pressure swing mode. The essentially dry gas is transferred through line 613 into surge vessel 614 wherein fluid is transferred through line 615 into heater 616 to form a heated water-depleted reformate stream which is routed into Manifold A. The remaining portion of FIG. 9 represents the SER process wherein the heated water-depleted reformate shall be subject to a shift reaction in a plurality of reactors operated in cycle to convert $CO_2$ and hydrogen in the reformate to CO and water via the reverse water gas shift reaction and to recover a CO-enriched product.

Manifold A is in flow communication with branch inlet lines 711 and 721 which are connected to the inlet ends of reactors 601 and 602. Lines 711 and 721 are equipped with valves 711a and 721a, respectively. Opening of the appropriate valve permits the pressurized heated water-depleted reformate to flow through manifold A into the selected reactor being initially placed on stream. Thus, by opening valve 711a, while valve 721a is closed, the reformate may be caused to flow from manifold A, through line 711 and into reactor 601.

Reactors 601 and 602 are fitted at their respective outlet ends with lines 740 and 750 respectively, each equipped with control valves 716a and 726a, respectively. Lines 740 and 750 are operatively connected to manifold E via lines 716 and 726 through which a CO-enriched stream withdrawn from reactors 601 and 602 can be collected in separator 717. Separator 717 can consist of any conventional separation system including a CO-VSA unit or a conventional distillation system. The high purity CO product can be collected via line 718 and the CO-depleted stream 719 is optionally compressed in compressor or blower 808 and combined with line 805 which leads to the hydrogen PSA 806. Thus, by opening the appropriate valve 716a or 726a, the CO-enriched mixture is caused to flow from the corresponding reactor through lines 740 and 716 or lines 750 and 726 into manifold E for passage into separator 717.

Reactors 601 and 602 are operatively connected to lines 711 and 721, each of which is in flow communication with lines 713 and 723. Lines 713 and 723 are provided with control valves 713a and 723a, respectively, such lines being in flow communication with manifold B. Manifold B can be placed in flow communication with reactor 601 or 602 via lines 713 and 723 upon opening valve 713a or 723a, respectively. Manifold B is also in flow communication with pump 760 which is connected to line 762 which can be combined with stream 611.

Manifold C is in flow communication with reactors 601 and 602 via lines 714 and 724, each line which is equipped with valves 714a and 724a, respectively. Regeneration effluent from reactors 601 and 602 may be passed through lines 714 and 724 into manifold C for separation in separator 735 into stream 736 which is a water-enriched product stream and stream 734 comprising weakly adsorbing purge fluid which can be passed into storage tank 733 for later use.

Manifold D is connected to pump 731 which receives various process fluids via lines 730 and 732. Such process fluids pass through line 730 or line 732 and are pressurized via pump 731. The pressurized fluids may be passed through Manifold D which is in flow communication with reactors 601 and 602 via lines 715 and 725, respectively. Lines 715 and 725 are each fitted with valves 715a and 725a such that the flow of streams from Manifold D into reactors 601 and 602 can be controlled. Moreover, weakly adsorbing purge fluid can be transferred to pump 731 via line 732 by opening valve 732a or by importing weakly adsorbing purge fluid via line 730.

Operation of the SER cycle of the several embodiments represented in FIG.9 will all now be explained in connection with arbitrarily chosen cycle having eight timed periods of ten minutes per period as set forth in Table 2. Although not limited thereto, the SER process as illustrated in FIG. 9 utilizes reactors 601 and 602 which are operated in cycle according to a predetermined timed sequence. Other arrangements using fewer or a greater number of reactors and the associated gas manifolds and switch valves may be employed, optionally using interrupted or discontinuous operation (using idling) of pumps. Other arrangements using more than two reactors may be employed by appropriate sequencing of the individual steps or periods of the process cycle.

**TABLE 2**

| Steps | Time Minutes | 711a | 712a | 713a | 714a | 715a | 716a | 732a | 721a | 722a | 723a | 724a | 725a | 726a | 732a | Reactor Sorber II Steps |
|---|---|---|---|---|---|---|---|---|---|---|---|---|---|---|---|---|
| Sorpreaction | 0 to 10 | O | C | C | C | C | O | C | O | O | C | C | O | C | C | Purge, Ph |
| Sorpreaction | 10 to 20 | O | C | C | C | C | O | C | C | C | O | C | C | C | C | Depressurize |
| Sorpreaction | 20 to 30 | O | C | C | C | C | O | C | C | C | C | O | C | C | C | Purge I, PI |
| Sorpreaction | 30 to 40 | O | C | C | C | C | O | C | C | C | C | C | O | C | C | Purge II, PI |
| Sorpreaction | 50 to 60 | O | C | C | C | C | O | C | O | C | C | C | C | O | C | Pressurize |
| Purge, Ph | 50 to 60 | C | O | O | O | O | C | C | O | O | O | O | O | O | C | Sorpreaction |
| Depressurize | 60 to 70 | C | O | O | O | O | C | C | O | O | O | O | O | O | C | Sorpreaction |
| Purge, PI | 70 to 80 | C | O | O | O | O | C | C | O | O | O | O | O | O | C | Sorpreaction |
| Purge II, PI | 80 to 90 | C | O | O | O | O | C | C | O | O | O | O | O | O | C | Sorpreaction |
| Pressurize | 90 to 100 | O | C | C | C | C | O | C | O | O | O | O | O | O | C | Sorpreaction |

According to the alternate embodiment of FIG. 9, each of the reactors 601 and 602 undergo four periods of the reaction/adsorption step, referred to as the sorpreaction step, one period of the depressurization step, one period of the Purge I step, one period of the Purge II step, and one period of the pressurization step. As illustrated in Table 2, the steps undertaken at startup in each of reactors 601 and 602 are staggered to enable at least one of the two reactors to undergo the sorpreaction step at all times during the process cycle. The operation of the invention described in FIG. 9 involves principally the following sequence of steps: In applying the following steps, the first pressure ranges from 2 atmospheres to 50 atmospheres and the second pressure ranges from 0.05 to 2 atmospheres.

(a) **SORPREACTION**—the heated water depleted reformate (feedstock) at a first predetermined pressure is passed through the reactor containing an admixture of shift catalyst and adsorbent preferentially selective toward water wherein a CO-enriched stream is withdrawn from the reactor. Water is selectively adsorbed by the adsorbent and a reaction mass transfer zone (RMTZ) is formed inside the reactor which moves toward the outlet or discharge end of the reactor as more feedstock is passed through the reactor. The adsorbent at the leading edge of the RMTZ is essentially free of the adsorbed water while the trailing edge of the RMTZ is equilibrated with water at the local conditions. The sorpreaction step is continued until the adsorbent in the reactor is essentially saturated with water. In other words, the sorpreaction step ends once the adsorption RMTZ has reached the effluent end of the reactor or somewhat short of it. The CO-enriched stream is discharged from the reactor.

(b) **DEPRESSURIZATION**—the reactor is countercurrently depressurized to a second predetermined pressure by withdrawing a mixture comprising unreacted feedstock, CO and water. The depressurization step is continued until the reactor reaches the second predetermined pressure.

(c) **PURGE I**—the reactor is countercurrently purged at the second pressure with a weakly adsorbing purge fluid to desorb water from the adsorbent and a mixture comprising weakly adsorbing purge fluid, unreacted feedstock, a portion of CO and a portion of water is withdrawn from the reactor.

(d) **PURGE II**—the reactor is countercurrently purged at the second pressure with a CO-enriched purge fluid which does not contain $CO_2$ and hydrogen to desorb the weakly adsorbing purge fluid and a mixture comprising the weakly adsorbing purge fluid, CO and water is withdrawn from the reactor.

(e) **PRESSURIZATION**—the reactor is countercurrently pressurized from the second pressure to the first pressure with CO-enriched purge fluid prior to commencing another process cycle within the reactor.

The valve positions during the above-mentioned operating cycle are also set forth in Table 2. The designation "O" indicates that a specified valve is open while a "C" represents that a specified valve is closed. The operative sequence of steps occurring in reactor 601 during a complete process cycle will now be described in exhaustive detail so that operation of a continuous process will be fully understood. The identical sequence of steps according to Table 2 occurs in staggered sequence in reactor 602.

Again, referring to the embodiment disclosed in FIG. 9 and the sequence periods and valve positions designated in Table 2, reactor 601 undergoes four sequence periods of the sorpreaction step. Feedstock stored in storage tank 614 is preheated in heater 616 and then introduced into reactor 601 by opening valves 711a and 716a and closing valves 713a, 714a and 715a thereby allowing feedstock to flow through manifold A, line 711 and into reactor 601 which contains an admixture of a desired shift catalyst and a water-selective adsorbent.

The sorpreaction is continued until reactor 601 is essentially saturated with adsorbed water. Water is selectively adsorbed onto the adsorbent and a reaction mass transfer zone (RMTZ) is formed within reactor 601 which moves toward the discharge end of reactor 601 as more feedstock is passed. The sorpreaction is completed when the MTZ reaches the effluent end of the reactor or somewhat short of it by a predesigned set point.

A CO-enriched stream exits the discharge end of reactor 601 via lines 740 and 716 and flows into manifold E for collection in separator 717. Optionally, the mixture in separator 717 can be separated by conventional techniques such as pressure swing adsorption, vacuum swing adsorption, thermal swing adsorption or distillation or condensation to form a stream comprising essentially pure CO which is discharged from separator 717 via line 718 and the remainder of the components of the mixture are discharged via line 719.

The process proceeds with one period of the depressurization step wherein reactor 601 is countercurrently depressurized to a second predetermined pressure by withdrawing a mixture comprising unreacted feedstock, CO and water from the inlet end of reactor 601. Valve 713a is opened while valves 711a and 714a remain closed allowing the mixture to be passed through lines 711 and 713 into manifold B and in flow communication with pump 760. The mixture exits the discharge end of pump 760 proceeding via line 762 for use as fuel (not shown) or recycle into line 611 for use as feedstock in a subsequent process cycle. The depressurization step is continued until the reactor reaches the second predetermined pressure.

Reactor 601 is then subjected to one period of the purge I step. Reactor 601 is countercurrently purged at the second pressure with weakly adsorbing purge fluid. Upon opening valves 714a and 715a while valves 725a and 732a remain in the closed position, weakly adsorbing purge fluid from an external source passes through pump 731 via line 730 and exits pump 731 at the second pressure to proceed via manifold D, line 715 and line 740 into the exit end of reactor 601. A mixture comprising weakly adsorbing purge fluid, unreacted feedstock, CO and water is withdrawn from reactor 601 via line 711, line 714 and manifold C and is collected in separator 735. This mixture may be used as fuel, discharged for use outside the process or separated in separator 735 to form a stream of weakly adsorbing purge gas and a water enriched stream 736. A portion of the weakly adsorbing purge fluid may be transferred through line 734 into storage tank 733 for future use. Upon demand via opening valve 732a, weakly adsorbing purge fluid may be drawn to pump 731 via lines 732 and 730 for use in subsequent process cycles.

Reactor 601 is then subjected to one period of the purge II step wherein reactor 601 is countercurrently purged with a CO-enriched fluid which does not contain both hydrogen and $CO_2$. Upon opening valves 714a and 715a while valves 725a and 732a remain in the closed position, the CO-enriched purge fluid from an external source passes through pump 731 via line 730 and exits pump 731 at the second pressure to proceed via manifold D, line 715 and line 740 into the exit end of reactor 601. A mixture comprising weakly adsorbing purge fluid, water and CO-enriched purge fluid is withdrawn from reactor 601 via line 711, line 714 and manifold C and is collected in separator 735. This mixture may be used as fuel or discharged for use outside the process.

The final step of the process cycle involves a single sequence of the pressurization step wherein reactor 601 is countercurrently pressurized from the second pressure to the first pressure with a CO-enriched purge fluid or high purity CO product stream 718 prior to commencing another process cycle within the reactor. Specifically, upon opening valve 715a while valves 711a, 713a, 714a, 725a and 732a remain in the closed position, the CO-enriched purge fluid passes through pump 731 via line 730 and exits pump 731 at the second pressure to proceed via manifold D, line 715 and line 740 into the exit end of reactor 601. This step is stopped when reactor 601 reaches the first pressure.

The process proceeds through additional cycles according to the above-mentioned steps enumerated in Table 2. While the sequence periods are depicted as being of equal length, this is neither required or necessary. The times will be set by allowable maximum gas flow rates, valve and line sizes and the properties of the adsorbent used. Alternate routines may be employed for establishing the duration of each of the cycle steps. For example, the end of a particular step may be determined by other techniques known in the art such as by analysis of the composition of the reactor effluent.

Alternately, each reaction may be subjected to an additional countercurrent Purge step at the first pressure with a weakly adsorbing purge fluid between the sorpreaction step and the depressurization step and withdrawing a mixture comprising unreacted feedstock, CO and water which can be recycled as feed to the SER reactors via manifold B, pump 760 and line 762.

Suitable catalysts for conducting the steam-methane reforming reaction include conventional steam-methane reforming and prereforming catalysts such as nickel-alumina, nickel-magnesium alumina and the noble metal catalysts.

Suitable water gas shift catalysts for conducting the reverse shift reaction in the reactors or the SER cycle include conventional shift catalysts such iron-chromium high temperature shift catalyst, copper-zinc oxide low temperature shift catalyst and copper/zinc oxide medium temperature shift catalyst.

Respecting the water adsorbents to be used in the reactors of the integrated SER process, the adsorbent must be active at the reaction conditions meaning that such the adsorbent must retain its capacity and selectivity for the more adsorbable product. Second, the adsorbent must be chemically neutral and must not act as a catalyst for the reverse water gas shift reaction.

The term, weakly adsorbing fluid, refers to a fluid which is capable of displacing the product which is adsorbed by the adsorbent during operation of the process and which can then be desorbed by the less adsorbing product such that subsequent process cycles can be conducted in each reactor. One of ordinary skill in the art can readily select one or a mixture of weakly adsorbing fluids suitable for use in the claimed invention.

The general and alternate embodiments of the present invention can be operated using conventional hardware. For example, suitable reactors include any vessel which is capable of being subjected to the reaction conditions required to practice a particular equilibrium controlled process such as shell and tube reactors. Moreover, the separators enumerated in the process are readily selected by one of ordinary skill in the art based upon considerations such as the particular mixtures to be separated, the volume of fluids to be separated and the like.

The following examples are provided to further illustrate Applicants' process for producing CO. The examples are illustrative and are not intended to limit the scope of the appended claims.

## EXPERIMENTAL SECTION

The following examples are provided to further illustrate Applicants' claimed process for producing CO which integrates a conventional SMR process with an SER cycle which shifts $CO_2$ present in the SMR reformate to CO via the reverse water gas shift. The examples are illustrative and are not intended to limit the scope of the appended claims.

Mass balance calculations were carried out for selected processes depicted in FIGS. 1 through 7. Thermodynamic equilibrium calculations used to determine the steam methane reformer effluent composition were carried out using a software package entitled "HSC Chemistry for Windows", from Outokumpu Research Oy, Finland. All other calculations were within the ordinary pervue of one of ordinary skill in the art of chemical engineering. The following assumptions were utilized in making the calculations:

a) the reformate product composition is dictated by equilibrium conversion of the reformer products at constant temperature and pressure;
b) the steam methane reformer operates at 850°C and 25 atmosphere pressure;
c) the feed stream to the reformer contains 25 moles/min of $CH_4$ and 75 moles/min of $H_2O$;
d) an additional feed stream of 60 moles/hr of $CO_2$ is added to the reformer or sorption enhanced reactor when the case of $CO_2$ import is considered (Figures 5, 8);
e) the CO-VSA process produces essentially pure CO product (99.5%) at 85% carbon monoxide recovery;
f) the H2-PSA process produces essentially pure H2 product (99.9%) at 85% hydrogen recovery;
g) the conversion of $CO_2$ to CO in the Sorption Enhanced Reactor Process is 80% (i.e., 80% of the $CO_2$ fed to the reactor is withdrawn as CO product from the reactor);
h) the membrane separator in Figures 6 and 8 rejects 30% of the feed hydrogen, 67% of the feed carbon dioxide, and 97% of the feed carbon monoxide and methane, where the rejection parameter is defined as the ratio of the amount of a specific component in the reformate (or high pressure) stream exiting the membrane unit over the amount of that component in the feed stream to the membrane unit; and
i) the conversion of carbon monoxide in the shift reactors is 80%.

## EXAMPLE 1

### Integration of the CO-SER Process with CO Production Processes

Table 3 contains mass balance data for some of the process schemes for producing carbon monoxide as depicted in Figures 5, 6 and 8. The table provides the total moles of carbon monoxide produced as product, the number of moles of carbon monoxide produced per mole of fresh methane fed to the SMR reactor ($CO/CH_4$) and the total moles of all components fed to the SMR reactor (which is proportional to the number of tubes required in the reformer and the heat duty of the reformer).

TABLE 3 *

| COMPARATIVE PERFORMANCE OF INTEGRATED SERP-SMR PROCESS SCHEMES FOR PRODUCTION OF CO | | | | | |
|---|---|---|---|---|---|
| | | Net Quantity of CO Product | | Total Quantity of Feed to SMR | ($CO/CH_4$) |
| | | (moles) | | (moles) | |
| FIG. 5: | SMR + CO-VSA | 10.3 | | 100.0 | 0.41 |
| FIG. 5 | SMR + CO-VSA with imported $CO_2$ as SMR feed | 31.9 | | 160.0 | 1.28 |
| FIG. 6 | SMR + CO-VSA with recycled $CO_2/CH_4$ from CO-VSA waste gas as SMR feed | 20.0 | | 153.3 | 0.80 |
| FIG. 8 | SMR + SERP + CO-VSA | 15.7 | | 100.0 | 0.63 |
| FIG. 8 | SMR + SERP + CO-VSA with imported $CO_2$ as SERP feed | 46.2 | | 100.0 | 1.85 |

TABLE 3 * (continued)

| COMPARATIVE PERFORMANCE OF INTEGRATED SERP-SMR PROCESS SCHEMES FOR PRODUCTION OF CO | | | | |
|---|---|---|---|---|
| | | Net Quantity of CO Product | Total Quantity of Feed to SMR | $(CO/CH_4)$ |
| | | (moles) | (moles) | |
| FIG. 8 | SMR + SERP + CO-VSA with recycled $CO_2/CH_4$ from CO-VSA waste gas as SMR feed | 22.8 | 154.4 | 0.91 |
| * Feed to SMR: 25 moles $CH_4$ + 75 moles $H_2O$ (base case) | | | | |

Data for the base case system consisting of a steam methane reformer followed by separation of carbon monoxide by a CO-VSA unit (Figure 5) indicates that 10.3 moles/min of CO can be produced per 100 moles/min of feed to the reformer, and the $CO/CH_4$ ratio is 0.41. Applicants' process consisting of steam methane reforming, sorption enhanced reaction of CO2 and H2 to CO, and separation of carbon monoxide by a CO-VSA unit (an embodiment of Claim 1 illustrated in Figure 8) achieves production of 15.7 moles/min of CO per 100 moles/min of feed to the reformer, and the $CO/CH_4$ ratio is 0.63. Thus, addition of the SER cycle to a the SMR process yields an unexpected 52% increase in CO production over the prior art process at the same feed rate to the SMR.

One skilled in the art of steam methane reforming would realize that the CO production can be increased by adding carbon dioxide to the feed of the steam methane reformer. Data for the system consisting of a steam methane reformer with an additional imported $CO_2$ feed followed by separation of carbon monoxide by a CO-VSA unit (Figure 5) indicates that 31.9 moles/min of CO can be produced per 160 moles/min of feed to the reformer (100 moles/min of methane/steam mixture plus 60 moles/min carbon dioxide), and the $CO/CH_4$ ratio is 1.28. The patentee's new process consisting of steam methane reforming, sorption enhanced reaction of a mixture comprising the dried reformate stream plus a feed of pure carbon dioxide to shift $CO_2$ and $H_2$ to CO. and separation of carbon monoxide by a CO-VSA unit (an embodiment of Claim 5 illustrated in Figure 8) achieves production of 46.2 moles/min of carbon monoxide per 100 moles/min of feed to the reformer, and the $CO/CH_4$ ratio is 1.85. Thus, addition of the SER process to the existing process yields a substantial 45% increase in CO production over the prior art process at a steam methane reformer feed rate which is only 62% of the feed rate of the prior art process. In other words, for a given total reformer feed rate (methane plus steam plus carbon dioxide), the production of CO can be enhanced by 132% by using Applicants' claimed process. Applicants' process produces 4.48 times more CO, at the same reformer feed rate, than the base case consisting of a steam methane reformer followed by separation of carbon monoxide by a CO-VSA unit (Figure 5).

If an import stream of carbon dioxide is not available, one skilled in the art of steam methane reforming would realize that a carbon dioxide-enriched stream could be recovered from the separation system. The CO production rate of the process could then be increased by recycling this stream to the feed of the steam methane reformer. Data for the system consisting of a steam methane reformer with an additional feed of $CO_2$-enriched recycle stream followed by separation of carbon monoxide by a CO-VSA unit and formation of the $CO_2$-enriched recycle stream from the CO-depleted stream from the CO-VSA waste stream (Figure 6) indicates that 20.0 moles/min of CO can be produced per 153.3 moles/min of feed to the reformer (100 moles/min of methane/steam mixture plus 53.3 moles/min of $CO_2$-enriched stream), and the $CO/CH_4$ ratio is 0.80.

Applicants' claimed process consisting of a steam methane reformer with an additional feed of $CO_2$-enriched recycle stream followed by performing an SER cycle to shift $CO_2$ and hydrogen in the dried reformate to CO, separation of CO by a CO-VSA unit and formation of the $CO_2$-enriched recycle stream from the CO-depleted stream from the CO-VSA waste stream (an embodiment of Claim 4 illustrated in Figure 8) achieves production of 22.8 moles/min of carbon monoxide per 100 moles/min of feed to the reformer, and the $CO/CH_4$ ratio is 0.91. Thus, addition of the SER process to the existing process yields a significant 14% increase in CO production over the prior art process at a steam methane reformer feed rate which is only 65% of the feed rate of the prior art process. In other words, for a given total reformer feed rate (methane plus steam plus the carbon dioxide-enriched recycle stream), the production of CO can be enhanced by 75% by using the claimed process. Applicant' claimed process processes 2.21 times more CO, at only a 54% higher reformer feed rate, than the base case consisting of a steam methane reformer followed by separation of carbon monoxide by a CO-VSA unit (Figure 5).

## EXAMPLE 2

### Integration of the CO-SER Process with H2 Production Processes

Table 4 contains mass balance data for some of the process schemes for producing hydrogen (Figure 1) and smaller amounts of co-product carbon monoxide (Figures 7 and 9). The table gives the total moles of hydrogen and carbon monoxide produced as product.

TABLE 4 *

| COMPARATIVE PERFORMANCE OF INTEGRATED SERP-SMR PROCESS SCHEMES FOR SIMULTANEOUS PRODUCTION OF CO AND H2 | | Net Quantity of H2 Product | Net Quantity of CO Product |
|---|---|---|---|
| | | (moles) | (moles) |
| FIG. 1 | SMR + H$_2$ - PSA | 66.0 | 0 |
| FIG. 7 | SMR + H$_2$ - PSA + CO - VSA | 65.2 | 1.03 |
| FIG. 9 | SMR + H$_2$ - PSA + SERP + CO-VSA | 65.0 | 1.56 |
| * Feed to SMR: 25 moles CH$_4$ + 75 moles H$_2$O (base case) | | | |

Data for the base case process consisting of a steam methane reformer followed by separation of hydrogen by a H$_2$-PSA unit (Figure 1) indicates that 66.0 moles/min of H$_2$ can be produced per 100 moles/min of feed to the reformer. One skilled in the art of steam methane reforming would realize that small amounts of co-product carbon monoxide could be produced by taking a portion of the reformate gas (referred to as the slip stream), cooling it to ambient temperature, and then separating carbon monoxide via a suitable separator.

The CO-depleted waste gas from the separator could then be recycled to the H$_2$-PSA unit for partial recovery of the remaining hydrogen. Figure 7 illustrates a specific embodiment of this process. When 10 percent of the stream leaving condenser 114 is passed to the CO-VSA process as the slip stream (via line 118), a product stream of 1.03 moles/min of CO$_2$ is formed while the hydrogen product stream decreases to 65.2 moles/min (1.2% lower than base case) per 100 moles/min of feed to the reformer. Applicants' claimed process consisting of steam methane reforming, splitting the reformate into two streams (one of which is the slip stream), removing water from the slip streams to form a dried reformate stream, reacting this stream in a sorption enhanced reaction process to convert CO$_2$ and H$_2$ to CO, recovering the carbon monoxide in this stream with a CO-VSA unit, and finally recycling the waste gas from the CO-VSA unit to the H$_2$-PSA unit for partial recovery of remaining hydrogen (an embodiment of Claim 12 illustrated in Figure 9) achieves production of 1.56 moles/min of carbon monoxide and 65.0 moles/min of hydrogen (1.5% lower than base case) per 100 moles/min of feed to the reformer (assuming a slip stream consisting of 10 percent of the reformate stream exiting condenser 606). Thus, addition of the SER process to the existing process yields a 51% increase in CO production over the prior art process at the same slip stream flow rate while invoking only a minor decrease (<2%) in hydrogen production rate.

Having thus described the present invention, what is now deemed appropriate for Letters Patent is set forth in the following Claims.

## Claims

1. A process for producing carbon monoxide which comprises the steps of:

(a) reacting a feed stock comprising methane and water in the presence of a steam methane reforming catalyst at a temperature ranging from 700°C to 1000°C and a pressure ranging from 2 to 50 atmospheres to form a reformate comprising hydrogen, carbon monoxide, carbon dioxide and unreacted feedstock;

(b) removing water from the reformate to form a water-depleted reformate and heating the water-depleted reformate to a temperature ranging from 200° to 500°C to form a heated water-depleted reformate;

(c) introducing the heated water-depleted reformate into a plurality of reactors operated in a predetermined timed sequence and according to the following steps which are performed in a cycle within each reactor:

(1) reacting the heated water-depleted reformate at a first pressure in a first reactor containing an admixture of a water adsorbent and a water gas shift catalyst under reaction conditions sufficient to convert carbon dioxide and hydrogen to carbon monoxide and to adsorb water onto the adsorbent and withdrawing a CO-enriched stream;

(2) countercurrently depressurizing the first reactor to a second pressure by withdrawing a mixture comprising unreacted feedstock, carbon monoxide and water;

(3) countercurrently purging the first reactor at the second pressure with a weakly adsorbing purge fluid with respect to the adsorbent to desorb water from the adsorbent and withdrawing a mixture comprising unreacted feedstock, carbon monoxide and water;

(4) countercurrently purging the first reactor at the second pressure with a CO-enriched purge fluid which does not comprise hydrogen and carbon dioxide to desorb the weakly adsorbing purge fluid and withdrawing a mixture comprising the weakly adsorbing purge fluid, carbon monoxide and water; and

(5) countercurrently pressurizing the first reactor from the second pressure to the first pressure with the CO-enriched purge fluid prior to commencing another process cycle within the first reactor.

2. The process of Claim 1 further comprising:

(d) separating the CO-enriched stream of step c(1) to form a stream comprising CO and a CO-depleted stream.

3. The process of Claim 1 further comprising the following step which is conducted between step c(1) and step c(2): countercurrently purging the first reactor at the first pressure with a weakly adsorbing purge fluid and withdrawing a mixture comprising unreacted feedstock, carbon monoxide and water.

4. The process of Claim 2 further comprising separating the CO-depleted stream of step (d) to form a hydrogen-enriched waste gas stream and a hydrogen depleted, carbon dioxide enriched recycle stream and recycling at least a portion of the recycle stream for use as feedstock in step (a).

5. The process of Claim 1 further comprising:

(d) introducing a source of carbon dioxide into the heated water-depleted reformate stream prior to conducting step (c)

6. The process of Claim 1 wherein the admixture of the adsorbent and the catalyst comprises from 5% to 95% by weight of the adsorbent and from 95% to 5% by weight of the catalyst.

7. The process of Claim 1 step c wherein the first pressure ranges from 2 atmospheres to 50 atmospheres and the second pressure ranges from 0.05 to 2 atmospheres.

8. The process of Claim 1 wherein the adsorbent recited in step c is selected from the group consisting of zeolites, alumina or silica gel and the weakly adsorbing purge fluid is selected from the group consisting of methane, hydrogen, nitrogen and carbon dioxide.

9. The process of Claim 1 wherein the feedstock comprises water and methane in a stoichiometric ratio of water to methane ranging from 1.5 to 30.

10. The process of Claim 1 wherein the steam-methane reforming catalyst is selected from the group consisting of nickel-alumina, nickel-magnesium alumina and noble metal catalysts.

11. The process of Claim 1 wherein the water gas shift catalyst is selected from the group consisting of an iron -chromium high temperature shift catalyst, a copper/zinc oxide low temperature shift catalyst and a copper/zinc oxide medium temperature shift catalyst.

12. A process for producing carbon monoxide which comprises the steps of:

(a) reacting a feed stock comprising methane and water in the presence of a steam methane reforming catalyst at a temperature ranging from 700°C to 1000°C and a pressure ranging from 2 to 50 atmospheres to form a reformate comprising hydrogen, carbon monoxide, carbon dioxide and unreacted feedstock;

(b) cooling the reformate to a temperature ranging from 200° to 500°C to form a cooled reformate and dividing the cooled reformate into a first stream and a second stream;

(c) contacting the first stream with a water gas shift catalyst under reaction conditions sufficient to form a hydrogen-enriched first stream, cooling the hydrogen-enriched first stream to form a cooled hydrogen-enriched first stream and separating the cooled hydrogen enriched first stream to form a hydrogen product stream and a hydrogen-depleted stream;

(d) removing water from the second stream to form a water-depleted second stream and heating the water-depleted second stream to a temperature ranging from 200° to 500°C to form a heated water-depleted second stream;

(e) introducing the heated water-depleted second stream into a plurality of reactors operated in a predetermined timed sequence and according to the following steps which are performed in a cycle within each reactor:

(1) reacting the heated water-depleted second stream at a first pressure in a first reactor containing an admixture of a water adsorbent and a water gas shift catalyst under reaction conditions sufficient to convert carbon dioxide and hydrogen to carbon monoxide and to adsorb water onto the adsorbent and withdrawing a CO-enriched stream;

(2) countercurrently depressurizing the first reactor to a second pressure by withdrawing a mixture comprising unreacted feedstock, carbon monoxide and water;

(3) countercurrently purging the first reactor at the second pressure with a weakly adsorbing purge fluid with respect to the adsorbent to desorb water from the adsorbent and withdrawing a mixture comprising unreacted feedstock, carbon monoxide and water;

(4) countercurrently purging the first reactor at the second pressure with a CO-enriched purge fluid which does not comprise hydrogen and carbon dioxide to desorb the weakly adsorbing purge fluid and withdrawing a mixture comprising the weakly adsorbing purge fluid, carbon monoxide and water; and

(5) countercurrently pressurizing the first reactor from the second pressure to the first pressure with the CO-enriched purge fluid prior to commencing another process cycle within the first reactor; and

(f) separating the CO-enriched stream of step c(1) to form a stream comprising CO and a CO-depleted stream, compressing the CO-depleted stream and combining the compressed CO-depleted stream with the cooled hydrogen enriched first stream of step c prior to separating the cooled hydrogen enriched first stream to form a hydrogen product stream and a hydrogen-depleted stream.

13. The process of Claim 12 further comprising the following step which is conducted between step e(1) and step e(2): countercurrently purging the first reactor at the first pressure with a weakly adsorbing purge fluid and withdrawing a mixture comprising unreacted feedstock, carbon monoxide and water.

14. The process of Claim 12 wherein the admixture of the adsorbent and the catalyst comprises from 5% to 95% by weight of the adsorbent and from 95% to 5% by weight of the catalyst

15. The process of Claim 12 step e wherein the first pressure ranges from 2 atmospheres to 50 atmospheres and the second pressure ranges from 0.05 to 2 atmospheres.

16. The process of Claim 12 wherein the adsorbent recited in step e is selected from the group consisting of zeolites, alumina or silica gel and the weakly adsorbing purge fluid is selected from the group consisting of methane, hydrogen, nitrogen and carbon dioxide.

17. The process of Claim 12 wherein the feedstock comprises water and methane in a stoichiometric ratio of water to methane ranging from 1.5 to 30.

18. The process of Claim 12 wherein the steam-methane reforming catalyst is selected from the group consisting of nickel-alumina, nickel-magnesium alumina and noble metal catalysts.

19. The process of Claim 12 wherein the water gas shift catalyst is selected from the group consisting of an iron-chromium high temperature shift catalyst, a copper/zinc oxide low temperature shift catalyst and a copper/zinc oxide medium temperature shift catalyst.

**Patentansprüche**

1. Verfahren zum Herstellen von Kohlenmonoxid, das die Schritte umfasst:

   a) Reagieren eines Einsatzprodukts, welches Methan und Wasser umfasst in der Anwesenheit eines Dampf-Methan reformierenden Katalysators, bei einer Temperatur im Bereich von 700°C bis 1000°C und einem Druck im Bereich von 2 bis 50 Atmosphären, um ein Reformat zu bilden, welches Wasserstoff, Kohlenmonoxid, Kohlendioxid und nichtreagiertes Einsatzprodukt enthält;
   b) Entziehen von Wasser aus dem Reformat, um ein wasserabgereichertes Reformat zu bilden, und Aufheizen des wasserabgereicherten Reformats auf eine Temperatur im Bereich von 200° bis 500°C, um ein aufgeheiztes, wasserabgereichertes Reformat zu bilden;
   c) Einführen des aufgeheizten, wasserabgereicherten Reformats in eine Mehrzahl von Reaktoren, die in einer vorbestimmten zeitlichen Sequenz betrieben werden und gemäß den folgenden Schritten, die in einem Zyklus innerhalb jedes Reaktors ausgeführt werden:

   (1) Reagieren des aufgeheizten, wasserabgereicherten Reformats bei einem ersten Druck in einem ersten Reaktor, der eine Beimengung eines Wasseradsorbenten und einen Wasser-Gas-Shiftkatalysator enthält, unter Reaktionsbedingungen, die ausreichen, um Kohlendioxid und Wasserstoff zu Kohlenmonoxid umzuwandeln und Wasser auf dem Adsorbenten zu adsorbieren, und Entziehen eines CO-angereicherten Stroms;
   (2) Druckabbau des ersten Reaktors im Gegenstrom auf einen zweiten Druck durch Entziehen einer Mischung, die nichtreagiertes Einsatzprodukt, Kohlenmonoxid und Wasser enthält;
   (3) Spülen des ersten Reaktors im Gegenstrom bei dem zweiten Druck mit einer schwach adsorbierenden Spülflüssigkeit in Bezug auf den Adsorbenten, um Wasser vom Adsorbenten zu desorbieren, und Entziehen eines Gemisches, das nichtreagiertes Einsatzprodukt, Kohlenmonoxid und Wasser enthält;
   (4) Spülen des ersten Reaktors im Gegenstrom bei dem zweiten Druck mit einer CO-angereicherten Spülflüssigkeit, die keinen Wasserstoff und kein Kohlendioxid enthält, um die schwach adsorbierende Spülflüssigkeit zu desorbieren, und Entziehen einer Mischung, die die schwach adsorbierende Spülflüssigkeit, Kohlenmonoxid und Wasser enthält; und
   (5) Druckaufbau des ersten Reaktors im Gegenstrom vom zweiten Druck auf den ersten Druck mit der CO-angereicherten Spülflüssigkeit bevor ein anderer Verfahrenszyklus innerhalb des ersten Reaktors begonnen wird.

2. Verfahren nach Anspruch 1 zusätzlich umfassend:

   d) Teilen des CO-angereicherten Stroms von Schritt c (1), um einen Strom, der CO enthält, und einen CO-abgereicherten Strom zu bilden.

3. Verfahren nach Anspruch 1 zusätzlich umfassend den folgenden Schritt, der zwischen Schritt c(1) und Schritt c(2) durchgeführt wird: Spülen des ersten Reaktors im Gegenstrom bei dem ersten Druck mit einer schwach adsorbierenden Spülflüssigkeit und Entziehen einer Mischung die nichtreagiertes Einsatzprodukt, Kohlenmonoxid und Wasser enthält.

4. Verfahren nach Anspruch 2 zusätzlich umfassend die Teilung des CO-abgereicherten Stroms von Schritt (d), um einen Wasserstoff-angereicherten Abgasstrom und einen Wasserstoff-abgereicherten, Kohlendioxid angereicherten Wiederaufbereitungsstrom zu bilden, und Recycling wenigstens eines Teils des Wiederaufbereitungsstroms, zum Gebrauch als Einsatzprodukt in Schritt (a).

5. Verfahren nach Anspruch 1 zusätzlich umfassend:

   d) Einführung einer Kohlendioxidquelle in den aufgeheizten, wasserabgereicherten Reformatstrom bevor Schritt (c) durchgeführt wird.

6. Verfahren nach Anspruch 1, bei dem die Beimengung des Adsorbenten und des Katalysators 5% bis 95% an Gewicht des Adsorbenten und 95% bis 5% an Gewicht des Katalysators enthällt.

7. Verfahren nach Anspruch 1 Schritt c, bei dem der erste Druck im Bereich von 2 Atmosphären bis 50 Atmosphären und der zweite Druck im Bereich von 0,05 bis 2 Atmosphären liegt.

**8.** Verfahren nach Anspruch 1, bei dem der in Schritt c genannte Adsorbent ausgewählt wird aus der Gruppe, die Zeoliten, Aluminiumoxid oder Siliziumoxid-Gel enthält, und die schwachadsorbierende Spülflüssigkeit ausgewählt wird aus der Gruppe, die Methan, Wasserstoff, Stickstoff und Kohlendioxid enthält.

**9.** Verfahren nach Anspruch 1, bei dem das Einsatzprodukt Wasser und Methan in einem stöchiometrischen Verhältnis von Wasser zu Methan im Bereich von 1.5 bis 30 enthält.

**10.** Verfahren nach Anspruch 1, bei dem der Dampf-Methan reformierende Katalysator ausgewählt wird aus der Gruppe, die Nickel-Aluminiumoxid, Nickel-Magnesium Aluminiumoxid und Edelmetallkatalysatoren umfasst.

**11.** Verfahren nach Anspruch 1, bei dem der Wasser-Gas-Shiftkatalysator ausgewählt wird aus der Gruppe, die einen Eisen-Chrom Hochtemperatur-Shiftkatalysator, einen Kupfer/Zink Oxid Niedertemperatur-Shiftkatalysator und einen Kupfer/Zink Oxid Mitteltemperatur-Shiftkatalysator enthält.

**12.** Verfahren zum Herstellen von Kohlenmonoxid, das die Schritte umfasst:

a) Reagieren eines Einsatzprodukts, welches Methan und Wasser umfasst in der Anwesenheit eines Dampf-Methan reformierenden Katalysators, bei einer Temperatur im Bereich von 700°C bis 1000°C und einem Druck im Bereich von 2 bis 50 Atmosphären, um ein Reformat zu bilden, welches Wasserstoff, Kohlenmonoxid, Kohlendioxid und nichtreagiertes Einsatzprodukt enthält;
b) Kühlen des Reformats auf eine Temperatur im Bereich von 200°C bis 500°C um ein gekühltes Reformat zu bilden, und Aufteilen des gekühlten Reformats in einen ersten Strom und einen zweiten Strom;
c) Kontaktieren des ersten Stroms mit einem Wasser-Gas-Shiftkatalysator unter Reaktionsbedingungen, die ausreichen, einen Wasserstoff-angereicherten ersten Strom zu bilden, Kühlen des Wasserstoff-angereicherten ersten Stroms, um einen gekühlten, Wasserstoff-angereicherten ersten Strom zu bilden, und Aufteilen des gekühlten, Wasserstoff-angereicherten ersten Stroms, um einen Wasserstoffproduktstrom und einen Wasserstoff-abgereicherten Strom zu bilden;
d) Entziehen von Wasser aus dem zweiten Strom, um einen wasserabgereicherten zweiten Strom zu bilden, und Aufheizen des wasserabgereicherten zweiten Stroms auf eine Temperatur im Bereich von 200°C bis 500°C, um einen aufgeheizten, wasserabgereicherten zweiten Strom zu bilden;
e) Einführen des aufgeheizten, wasserabgereicherten zweiten Stroms in eine Mehrzahl von Reaktoren, die in einer vorbestimmten zeitlichen Sequenz betrieben werden und gemäß den folgenden Schritten, die in einem Zyklus innerhalb jedes Reaktors ausgeführt werden:

(1) Reagieren des aufgeheizten, wasserabgereicherten zweiten Stroms bei einem ersten Druck in einem ersten Reaktor, der eine Beimengung eines Wasseradsorbenten und einen Wasser-Gas-Shiftkatalysator enthält, unter Reaktionsbedingungen, die ausreichen, um Kohlendioxid und Wasserstoff zu Kohlenmonoxid umzuwandeln und Wasser auf dem Adsorbenten zu adsorbieren, und Entziehen eines CO-angereicherten Stroms;
(2) Druckabbau des ersten Reaktors im Gegenstrom auf einen zweiten Druck durch Entziehen einer Mischung, die nichtreagiertes Einsatzprodukt, Kohlenmonoxid und Wasser enthält;
(3) Spülen des ersten Reaktors im Gegenstrom bei dem zweiten Druck mit einer schwach adsorbierenden Spülflüssigkeit in Bezug auf den Adsorbenten, um Wasser vom Adsorbenten zu desorbieren, und Entziehen eines Gemisches, das nichtreagiertes Einsatzprodukt, Kohlenmonoxid und Wasser enthält;
(4) Spülen des ersten Reaktors im Gegenstrom bei dem zweiten Druck mit einer CO-angereicherten Spülflüssigkeit, die keinen Wasserstoff und kein Kohlendioxid enthält, um die schwach adsorbierende Spülflüssigkeit zu desorbieren, und Entziehen einer Mischung, die die schwach adsorbierende Spülflüssigkeit, Kohlenmonoxid und Wasser enthält; und
(5) Druckaufbau des ersten Reaktors im Gegenstrom vom zweiten Druck auf den ersten Druck mit der CO-angereicherten Spülflüssigkeit bevor ein anderer Verfahrenszyklus innerhalb des ersten Reaktors begonnen wird; und

f) Teilen des CO-angereicherten Stroms von Schritt c (1), um einen Strom der CO enthält und einen CO-abgereicherten Strom zu bilden, Komprimierung des CO-abgereicherten Stroms und Kombination des komprimierten, CO-abgereicherten Stroms mit dem gekühlten, Wasserstoff-angereicherten ersten Strom aus Schritt c vor dem Teilen des gekühlten, Wasserstoff-angereicherten ersten Stroms, um einen Wasserstoffproduktstrom und einen Wasserstoff-abgereicherten Strom zu bilden.

**13.** Verfahren nach Anspruch 12 zusätzlich umfassend den folgenden Schritt, der zwischen Schritt e(1) und Schritt e (2) durchgeführt wird: Spülen des ersten Reaktors im Gegenstrom bei dem ersten Druck mit einer schwach adsorbierenden Spülflüssigkeit, und Entziehen einer Mischung die nichtreagiertes Einsatzprodukt, Kohlenmonoxid und Wasser enthält.

**14.** Verfahren nach Anspruch 12, bei dem die Beimengung des Adsorbenten und des Katalysators 5% bis 95% an Gewicht des Adsorbenten und 95 % bis 5 % an Gewicht des Katalysators entält.

**15.** Verfahren nach Anspruch 12 Schritt e, bei dem der erste Druck im Bereich von 2 Atmosphären bis 50 Atmosphären und der zweite Druck im Bereich von 0.05 bis 2 Atmosphären liegt.

**16.** Verfahren nach Anspruch 12, bei dem der in Schritt e genannte Adsorbent ausgewählt wird aus der Gruppe, die Zeoliten, Aluminiumoxid oder Siliziumoxid-Gel enthält, und die schwachadsorbierende Spülflüssigkeit ausgewählt wird aus der Gruppe, die Methan, Wasserstoff, Stickstoff und Kohlendioxid enthält.

**17.** Verfahren nach Anspruch 12, bei dem das Einsatzprodukt Wasser und Methan in einem stöchiometrischen Verhältnis von Wasser zu Methan im Bereich von 1.5 bis 30 enthält.

**18.** Verfahren aus Anspruch 12, bei dem der Dampf-Methan reformierende Katalysator ausgewählt wird aus der Gruppe, die Nickel-Aluminiumoxid, Nickel-Magnesium Aluminiumoxid und Edelmetallkatalysatoren umfasst.

**19.** Verfahren nach Anspruch 12, bei dem der Wasser-Gas-Shiftkatalysator ausgewählt wird aus der Gruppe, die einen Eisen-Chrom Hochtemperatur-Shiftkatalysator, einen Kupfer/Zink Oxid Niedertemperatur-Shiftkatalysator und einen Kupfer/Zink Oxid Mitteltemperatur-Shiftkatalysator enthält.

**Revendications**

**1.** Procédé de production d'un produit monoxyde de carbone, lequel procédé comporte les étapes consistant à:

(a) faire réagir une alimentation comportant du méthane et de l'eau en présence d'un catalyseur de reformage de vapeur et de méthane, à une température comprise entre 700° C et 1000 °C et à une pression comprise entre 2 et 50 atmosphères, pour former un produit de reformage comportant de l'hydrogène, du monoxyde de carbone, du dioxyde de carbone et de l'alimentation qui n'a pas réagi ;

(b) extraire l'eau du produit de reformage pour former un produit de reformage appauvri en eau, et chauffer le produit de reformage appauvri en eau à une température comprise entre 200° et 500°C pour former un écoulement appauvri en eau et chauffé ;

(c) introduire l'écoulement appauvri en eau et chauffé dans plusieurs réacteurs fonctionnant suivant une séquence cadencée prédéterminée, et en suivant les étapes ci-dessous, qui sont exécutées en cycle dans chaque réacteur:

(1) faire réagir l'écoulement appauvri en eau et chauffé dans un premier réacteur contenant un mélange d'un adsorbant de l'eau et d'un catalyseur de conversion du gaz à l'eau dans des conditions de réaction qui suffisent à convertir le dioxyde de carbone et l'hydrogène en monoxyde de carbone, à adsorber l'eau sur l'adsorbant et à extraire un écoulement enrichi en CO ;

(2) dépressuriser à contre-courant le premier réacteur jusqu'à une deuxième pression, en extrayant un mélange comportant de l'alimentation qui n'a pas réagi, du monoxyde du carbone et de l'eau ;

(3) purger à contre-courant le premier réacteur à la deuxième pression avec un fluide de purge qui s'adsorbe faiblement sur l'adsorbant, pour désorber l'eau de l'adsorbant, et extraire un mélange comportant de l'alimentation qui n'a pas réagi, du monoxyde et carbone et de l'eau ;

(4) purger à contre-courant le premier réacteur à la deuxième pression avec un fluide de purge enrichi en CO et qui ne comporte ni hydrogène ni dioxyde de carbone, pour désorber le fluide de purge qui s'adsorbe faiblement et extraire un mélange comportant le fluide de purge qui s'adsorbe faiblement, du monoxyde de carbone et de l'eau ; et (5) pressuriser à contre-courant le premier réacteur depuis la deuxième pression jusqu'à la première pression avec le fluide de purge enrichi en CO, avant de commencer un autre cycle du processus à l'intérieur du premier réacteur.

**2.** Procédé selon la revendication 1, comportant en outre l'étape consistant à :

(d) séparer l'écoulement enrichi en CO de l'étape c(1), pour former un écoulement comportant du CO et un écoulement appauvri en CO.

3. Procédé selon la revendication 1, comportant en outre l'étape ci-dessous, qui est exécutée entre l'étape c(1) et l'étape c(2) : purger à contre-courant le premier réacteur à la première pression avec un fluide de purge qui s'adsorbe faiblement, et extraire un mélange comportant de l'alimentation qui n'a pas réagi, du monoxyde de carbone et de l'eau.

4. Procédé selon la revendication 2, comportant en outre l'étape consistant à séparer l'écoulement appauvri en CO de l'étape (d) pour former un écoulement de gaz de rejet enrichi en hydrogène et un écoulement de recyclage appauvri en hydrogène et enrichi en dioxyde de carbone, et à recycler au moins une partie de l'écoulement de recyclage pour l'utiliser comme alimentation de l'étape (a).

5. Procédé selon la revendication 1, comportant en outre l'étape consistant à:

(d) introduire une source de dioxyde de carbone dans l'écoulement de produit de reformage appauvri en eau et chauffé avant d'exécuter l'étape (c).

6. Procédé selon la revendication 1, dans lequel le mélange de l'adsorbant et du catalyseur comporte de 5% à 95% en poids de l'adsorbant et de 95% à 5% en poids du catalyseur.

7. Procédé selon la revendication 1, dans lequel, dans l'étape (c), la première pression est comprise entre 2 atmosphères et 50 atmosphères, et la deuxième pression est comprise entre 0,05 et 2 atmosphères.

8. Procédé selon la revendication 1, dans lequel l'adsorbant mentionné à l'étape (c) est choisi dans le groupe constitué des zéolithes, de l'alumine et du gel de silice, et le fluide de purge qui s'adsorbe faiblement est choisi dans le groupe constitué du méthane, de l'hydrogène, de l'azote et du dioxyde de carbone.

9. Procédé selon la revendication 1, dans lequel l'alimentation comporte de l'eau et du méthane dans un rapport stoechiométrique de l'eau au méthane compris entre 1,5 et 30.

10. Procédé selon la revendication 1, dans lequel le catalyseur de reformage de vapeur - méthane est choisi dans le groupe constitué de l'alumine au nickel, de l'alumine au nickel - magnésium et des catalyseurs à métal noble.

11. Procédé selon la revendication 1, dans lequel le catalyseur de conversion du gaz à l'eau est choisi dans le groupe constitué d'un catalyseur de conversion à haute température au fer - chrome, d'un catalyseur de conversion à basse température au cuivre/oxyde de zinc et d'un catalyseur de conversion à température moyenne au cuivre/oxyde de zinc.

12. Procédé de production de monoxyde de carbone, lequel procédé comporte les étapes consistant à :

(a) faire réagir une alimentation comportant du méthane et de l'eau en présence d'un catalyseur de reformage de vapeur et de méthane à une température comprise entre 700° C et 1000° C et à une pression comprise entre 2 et 50 atmosphères, pour former à produit de reformage comportant de l'hydrogène, du monoxyde de carbone, du dioxyde de carbone et de l'alimentation qui n'a pas réagi ;
(b) refroidir le produit de reformage à une température comprise entre 200° et 500 °C pour former un produit de reformage refroidi, et diviser le produit de reformage refroidi en un premier écoulement et un deuxième écoulement ;
(c) mettre le premier écoulement en contact avec un catalyseur de conversion du gaz à l'eau dans des conditions de réaction qui suffisent à former un premier écoulement enrichi en hydrogène, refroidir le premier écoulement enrichi en hydrogène pour former un premier écoulement enrichi en hydrogène et refroidi, et séparer le premier écoulement enrichi en hydrogène et refroidi pour former un écoulement de produit hydrogène et un écoulement appauvri en hydrogène ;
(d) enlever l'eau du deuxième écoulement pour former un deuxième écoulement appauvri en eau et chauffer le deuxième écoulement appauvri en eau à une température comprise entre 200° et 500 °C pour former un deuxième écoulement appauvri en eau et chauffé ;
(e) introduire le deuxième écoulement appauvri en eau et chauffé dans plusieurs réacteurs que l'on fait travailler suivant une séquence cadencée prédéterminée et en suivant les étapes ci-dessous, qui sont exécutées en cycle dans chaque réacteur :

(1) faire agir le deuxième écoulement appauvri en eau et chauffé à une première pression dans un premier réacteur qui contient un mélange d'un adsorbant de l'eau et un catalyseur de conversion du gaz à l'eau, dans des conditions de réaction qui suffisent à convertir le dioxyde de carbone et l'hydrogène en monoxyde de carbone, à adsorber l'eau sur l'adsorbant, et à extraire un écoulement enrichi en CO ;

(2) dépressuriser à contre-courant le premier réacteur jusqu'à une deuxième pression en extrayant un mélange comportant de l'alimentation qui n'a pas réagi, du monoxyde de carbone et de l'eau ;

(3) purger à contre-courant le premier réacteur jusqu'à la deuxième pression avec un fluide de purge qui s'adsorbe faiblement sur l'adsorbant, pour désorber l'eau de l'adsorbant et extraire un mélange comprenant de l'alimentation qui n'a pas réagi, du monoxyde de carbone et de l'eau ;

(4) purger à contre-courant le premier réacteur jusqu'à la deuxième pression avec un fluide de purge enrichi en CO qui ne comporte pas d'hydrogène ni de dioxyde de carbone, pour désorber le fluide de purge qui s'adsorbe faiblement et extraire un mélange comprenant le fluide de purge qui s'adsorbe faiblement, du monoxyde et carbone et de l'eau, et

(5) pressuriser à contre-courant le premier réacteur depuis la deuxième pression jusqu'à la première pression avec le fluide de purge enrichi en CO avant de commencer un autre cycle du procédé dans le premier réacteur ; et

(f) séparer l'écoulement enrichi en CO de l'étape c(1) pour former un écoulement comportant du CO et un écoulement appauvri en CO, comprimer l'écoulement appauvri en CO et combiner l'écoulement appauvri en CO et comprimé avec le premier écoulement enrichi en hydrogène et refroidi de l'étape c avant de séparer le premier écoulement enrichi en hydrogène et refroidi, pour former un écoulement de produit hydrogène et un écoulement appauvri en hydrogène.

13. Procédé selon la revendication 12, comportant en outre l'étape ci-dessous, qui est conduite entre l'étape e(1) et l'étape e(2) : purger à contre-courant le premier réacteur à la première pression avec un fluide de purge qui s'adsorbe faiblement, et extraire un mélange comprenant de l'alimentation qui n'a pas réagi, du monoxyde de carbone et de l'eau.

14. Procédé selon la revendication 12, dans lequel le mélange de l'adsorbant et du catalyseur comporte de 5% à 95% en poids de l'adsorbant et de 95% à 5% en poids du catalyseur.

15. Procédé selon la revendication 12, dans lequel la première pression est comprise entre 2 atmosphères et 50 atmosphères, et la deuxième pression est comprise entre 0,05 et 2 atmosphères.

16. Procédé selon la revendication 12, dans lequel l'adsorbant mentionné à l'étape est choisi dans le groupe constitué des zéolithes, de l'alumine et du gel de silice, et le fluide de purge faiblement adsorbé est choisi dans le groupe constitué du méthane, de l'hydrogène, de l'azote et du dioxyde de carbone.

17. Procédé selon la revendication 12, dans lequel l'alimentation comporte de l'eau et du méthane dans un rapport stoechiométrique de l'eau au méthane compris entre 1,5 et 30.

18. Procédé selon la revendication 12, dans lequel le catalyseur de reformage de vapeur - méthane est choisi dans le groupe constitué de l'alumine au nickel, de l'alumine au nickel - magnésium et des catalyseurs à métal noble.

19. Procédé selon la revendication 12, dans lequel le catalyseur de conversion du gaz à l'eau est choisi dans le groupe constitué d'un catalyseur de conversion à haute température au fer - chrome, d'un catalyseur de conversion à basse température au cuivre/oxyde de zinc et d'un catalyseur de conversion à température moyenne au cuivre/oxyde de zinc.

CH₄ / H₂O → SMR → (heat exchanger, STEAM) → SHIFT → (heat exchanger, H₂O) → H₂-PSA → >99.9% H₂; WASTE GAS (TO FUEL)

FIG. 1
(PRIOR ART)

EP 0 737 647 B1

CH$_4$
H$_2$O

21

SMR

22

23

24

25 STEAM

26

27

SHIFT

28

29

30 H$_2$O

31

32 CO$_2$-VSA

35

>99.5% CO$_2$

34

38 H$_2$-PSA

37

>99.9% H$_2$

36

WASTE GAS
(TO FUEL)

*FIG. 2*

(PRIOR ART)

$CH_4$
$H_2O$

41

SMR

42

43

$CO_2$ ABSORBER/
STRIPPER

44

45

$CO_2$

46

TSA

47

48

$H_2O$
$CO_2$

49

COLD
BOX

50

51

>99.9% $H_2$

52

CO
$CH_4$

53

>99.5% CO

*FIG. 3*

(PRIOR ART)

EP 0 737 647 B1

*FIG. 4*

(PRIOR ART)

EP 0 737 647 B1

*FIG. 5*
(PRIOR ART)

FIG. 6

(PRIOR ART)

EP 0 737 647 B1

**FIG. 7**

(PRIOR ART)

EP 0 737 647 B1

FIG. 8

EP 0 737 647 B1

FIG. 9

EP 0 737 647 B1